# EUROPÄISCHE PATENTSCHRIFT

(11) **EP 4 482 132 B1**
(45) Veröffentlichungstag und Bekanntmachung des Hinweises auf die Patenterteilung: **04.03.2026**
(21) Anmeldenummer: 24182148.7
(22) Anmeldetag: 14.06.2024
(51) Int. Cl.: H04M 3/22, H04L 65/4061, H04L 65/80

(54) **VERFAHREN UND ANORDNUNG ZUM ÜBERMITTELN EINER SPRACHNACHRICHT**
METHOD AND ARRANGEMENT FOR COMMUNICATING A VOICE MESSAGE
PROCÉDÉ ET DISPOSITIF POUR LA TRANSMISSION D'UN MESSAGE VOCAL

(30) Priorität: 22.06.2023 DE 102023116369
(43) Veröffentlichungstag der Anmeldung: 25.12.2024
(73) Patentinhaber: Dräger Safety AG & Co. KGaA, 23560 Lübeck (DE)
(72) Erfinder: Marz, Heiko, 23558 Lübeck (DE); Brodersen, Michael, 23558 Lübeck (DE)

(56) Entgegenhaltungen:
- EP-A2- 0 887 957
- WO-A1-2018/028871

## Beschreibung

Die Erfindung betrifft ein Übermittlungs-Verfahren und eine Übermittlungs-Anordnung, welche eine Sprachnachricht von einer senderseitigen Spracheingabeeinheit zu einer empfängerseitigen Sprachausgabeeinheit zu übermitteln vermögen. Ein Mensch (der Sender) verwendet die senderseitige Spracheingabeeinheit, um die Sprachnachricht einzugeben. Die Sprachnachricht wird in ein Sprachnachricht-Signal umgewandelt. Das Sprachnachricht-Signal wird in einem Übertragungskanal übertragen und wieder in eine Sprachnachricht umgewandelt. Die empfängerseitige Sprachausgabeeinheit gibt die Sprachnachricht an einen anderen Menschen (an den Empfänger) aus, also in einer von einem Menschen akustisch wahrnehmbaren Form.

Um die Sprachnachricht zu übermitteln, werden in der Regel unterschiedliche Geräte und / oder unterschiedliche Übertragungsverfahren verwendet. Außerdem können Umgebungsgeräusche auftreten, und insbesondere kann eine Funkstrecke des Übertragungskanals durch eine Störgröße beeinträchtigt werden. Trotzdem soll der Empfänger die Sprachnachricht gut und unmissverständlich verstehen können.

EP 0887957 A2 offenbart die Bandbreitenanpassung eines Decodierungsnachfilters in Abhängigkeit von einem Maß für die Wiedergabetreue, wobei das Maß ein Referenzsignal (codiertes Signal) und ein zu testendes Signal (decodiertes Signal) vergleicht.

Der Erfindung liegt die Aufgabe zugrunde, ein Übermittlungs-Verfahren und eine Übermittlungs-Anordnung bereitzustellen, welche eine Sprachnachricht zu übermitteln und auszugeben vermögen und die Gefahr reduzieren, dass die nach der Übermittlung ausgegebene Sprachnachricht vom Empfänger nur unvollständig oder akustisch falsch verstanden wird.

Die Aufgabe wird durch ein Übermittlungs-Verfahren mit den Merkmalen des Anspruchs 1 und durch eine Übermittlungs-Anordnung mit den Merkmalen des Anspruchs 12 gelöst. Die Unteransprüche legen vorteilhafte Ausgestaltungen des Übermittlungs-Verfahrens fest. Vorteilhafte Ausgestaltungen des erfindungsgemäßen Übermittlungs-Verfahren sind, soweit sinnvoll, auch vorteilhafte Ausgestaltungen der erfindungsgemäßen Übermittlungs-Anordnung und umgekehrt.

Nachfolgend werden die Bezeichnungen "Sprachnachricht" und "Sprachnachricht-Signal" verwendet. Eine Sprachnachricht wird von einem Menschen mit seinem Sprachorgan erzeugt und per Schallwellen durch die Luft oder durch ein sonstiges gasförmiges Medium hindurch übertragen. Ein anderer Mensch kann diese Sprachnachricht mit seinem Gehör akustisch wahrnehmen. Ein Sprachnachricht-Signal lässt sich per Kabel und / oder per Funkwellen übermitteln und von einer Signalverarbeitungseinheit erzeugen und / oder verarbeiten. Eine Spracheingabeeinheit vermag eine Sprachnachricht, die von einem Menschen akustisch wahrnehmbar ist, zu empfangen und in ein Sprachnachricht-Signal umzuwandeln. Umgekehrt vermag eine Sprachausgabeeinheit ein Sprachnachricht-Signal zu empfangen, in eine Sprachnachricht umzuwandeln und akustisch und optional auf eine weitere von einem Menschen wahrnehmbaren Weise auszugeben. Ein Mikrophon ist ein Beispiel für eine Spracheingabeeinheit, ein Lautsprecher und ein Kopfhörer sind zwei Beispiele für eine Sprachausgabeeinheit.

Außerdem werden im Folgenden die Bezeichnungen "Übertragungskanal", "Übertragung eines Signals in einem Übertragungskanal" sowie "Übermittlung eines Signals" verwendet. Ein Übertragungskanal ist eine Anordnung mit einer Abfolge von signalverarbeitenden Geräten und optionalen Verbindungseinheiten, wobei diese Anordnung ein Eingangssignal empfängt und überträgt und ein Ausgangssignal ausgibt, wobei das Ausgangssignal vom Eingangssignal abhängt und in vielen Fällen idealerweise gleich dem Eingangssignal ist. Soweit nicht anders erwähnt, können diese Übertragung und diese Übermittlung eines Signals mittels elektromagnetischer Wellen, insbesondere Funkwellen, und / oder kabelgebunden durchgeführt werden. Übliche und häufig standardisierte Verfahren der Signalübertragung lassen sich anwenden, insbesondere Verfahren des Mobilfunks.

Gemäß dem erfindungsgemäßen Übermittlungs-Verfahren wird eine Sprachnachricht von einer senderseitigen Spracheingabeeinheit zu einer empfängerseitigen Sprachausgabeeinheit übermittelt. Die erfindungsgemäße Übermittlungs-Anordnung umfasst eine Übermittlungs-Vorrichtung, welche eine Sprachnachricht zu übermitteln vermag.

Die Übermittlung der Sprachnachricht umfasst die folgenden Schritte:
- Die senderseitige Spracheingabeeinheit empfängt als die zu übermittelnde Sprachnachricht eine Eingabe-Sprachnachricht. Die senderseitige Spracheingabeeinheit wandelt die Eingabe-Sprachnachricht in ein Eingangs-Sprachnachricht-Signal um.
- Das Eingangs-Sprachnachricht-Signal wird an den Übertragungskanal übermittelt, bevorzugt über eine drahtgebundene Verbindung.
- Der Übertragungskanal überträgt das Eingangs-Sprachnachricht-Signal und gibt als Ergebnis der Übertragung ein Ausgangs-Sprachnachricht-Signal aus.
- Das Ausgangs-Sprachnachricht-Signal wird vom Übertragungskanal an die empfängerseitige Sprachausgabeeinheit übermittelt, bevorzugt über eine drahtgebundene Verbindung.
- Die empfängerseitige Sprachausgabeeinheit empfängt das übermittelte Ausgangs-Sprachnachricht-Signal, wandelt es in eine Ausgabe-Sprachnachricht um und gibt die Ausgabe-Sprachnachricht akustisch aus.

Die Übermittlungs-Vorrichtung ist dazu ausgestaltet, eine Sprachnachricht durch diese Schritte zu übermitteln.

Der Vorgang, das Eingabe-Sprachnachricht-Signal im Übertragungskanal zu übermitteln, umfasst die folgenden Schritte:
- Eine Signalverarbeitungseinheit empfängt und verarbeitet das Eingangs-Sprachnachricht-Signal. Bevorzugt verstärkt die Signalverarbeitungseinheit das Eingangs-Sprachnachricht-Signal und / oder führt eine Entzerrung durch.
- Die Signalverarbeitungseinheit kann mehrere einzelne Funktionsblöcke und / oder Bauteile umfassen. Die Signalverarbeitungseinheit weist mindestens einen veränderbaren Parameter auf, dem ein Wert zugewiesen ist. Die Signalverarbeitungseinheit wendet den zugewiesenen Parameterwert an, um das Eingangs-Sprachnachricht-Signal zu verarbeiten. Der jeweils verwendete Wert des oder jedes veränderbaren Parameters beeinflusst die Verarbeitung des Sprachnachricht-Signals durch die Signalverarbeitungseinheit. Möglich ist natürlich, dass die Signalverarbeitungseinheit weitere Parameter aufweist, auch solche, die nicht notwendigerweise veränderbar sind.
- Das verarbeitete Eingangs-Sprachnachricht-Signal wird von der Signalverarbeitungseinheit an ein senderseitiges Funkgerät und vom senderseitigen Funkgerät an ein empfängerseitiges Funkgerät übertragen. Die Übertragung vom senderseitigen zum empfängerseitigen Funkgerät wird auf einer Funkstrecke durchgeführt, also drahtlos mittels Funkwellen. Die Übertragung von der Signalverarbeitungseinheit zum senderseitigen Funkgerät kann kabelgebunden und / oder drahtlos durchgeführt werden, insbesondere unter Verwendung einer Bluetooth-Verbindung.
- Das empfängerseitige Funkgerät empfängt das übertragene Signal und gibt es als das Ausgangs-Sprachnachricht-Signal aus.

Die Übermittlungs-Vorrichtung ist dazu ausgestaltet, eine Sprachnachricht dergestalt im Übertragungskanal zu übermitteln. Zum Übertragungskanal gehören also die Signalverarbeitungseinheit und die beiden Funkgeräte.

Vor dem Schritt, die Sprachnachricht zu übermitteln, wird mindestens einmal ein Justierverfahren durchgeführt, optional mehrmals oder mehrere Justierverfahren. Beispielsweise wird das Justierverfahren erneut durchgeführt, wenn die erste Durchführung kein gutes Ergebnis erbracht hat. Das oder mindestens ein Justierverfahren wird automatisch unter Verwendung einer signalverarbeitenden Mess- und Justiereinheit durchgeführt. Diese Mess- und Justiereinheit ist ein Bestandteil der erfindungsgemäßen Übermittlungs-Anordnung.

Das Justierverfahren umfasst die folgenden Schritte:
- Die Mess- und Justiereinheit generiert ein Eingangs-Testsignal.
- Das Eingangs-Testsignal wird an den Übertragungskanal übermittelt.
- Das Eingangs-Testsignal wird im Übertragungskanal übertragen. Durch die Übertragung im Übertragungskanal wird abhängig vom Eingangs-Testsignal ein Ausgangs-Testsignal erzeugt. Idealerweise stimmt das Ausgangs-Testsignal mit dem Eingangs-Testsignal überein. In der Praxis weicht in der Regel das Ausgangs-Testsignal vom Eingangs-Testsignal ab.
- Das Ausgangs-Testsignal wird am Übertragungskanal vorbei zurück zur Mess- und Justiereinheit übermittelt, also unter Umgehung des Übertragungskanals, und zwar bevorzugt ausschließlich oder wenigstens über eine Teilstrecke drahtgebunden.
- Die Mess- und Justiereinheit bewertet die Güte des Übertragungskanals. Für diese Bewertung verwendet die Mess- und Justiereinheit das empfangene Ausgangs-Testsignal und vergleicht es hierfür bevorzugt mit dem Eingangs-Testsignal.
- Die Mess- und Justiereinheit berechnet für den oder mindestens einen veränderbaren Parameter der Signalverarbeitungseinheit jeweils einen Wert. Um den oder jeden Parameterwert zu berechnen, verwendet die Mess- und Justiereinheit die Bewertung der Übertragungskanal-Güte.
- Veranlasst wird, dass der oder jeder berechnete Parameterwert an die Signalverarbeitungseinheit übermittelt wird. Weiterhin wird veranlasst, dass die Signalverarbeitungseinheit den oder mindestens einen übermittelten Parameterwert verwendet, um das Eingangs-Sprachnachricht-Signal zu verarbeiten. Optional wird der Parameterwert abgespeichert und bei Bedarf verwendet, auch mehrmals.

Bevorzugt werden nacheinander mehrere Sprachnachrichten von der senderseitigen Spracheingabeeinheit zur empfängerseitigen Sprachausgabeeinheit übermittelt, nachdem einmal das Justierverfahren durchgeführt wurde.

Erfindungsgemäß umfasst der Übertragungskanal, auf den sich das Justierverfahren bezieht, eine Funkstrecke vom senderseitigen Funkgerät zum empfängerseitigen Funkgerät. Dadurch ist es nicht nötig, die senderseitige Spracheingabeeinheit mit der empfängerseitigen Sprachausgabeeinheit durch ein Kabel zu verbinden, um die Sprachnachricht zu übermitteln. Dies wäre bei vielen möglichen Anwendungen der Erfindung gar nicht möglich, beispielsweise wenn der Sender ein Feuerwehrmann oder eine sonstige Einsatzkraft ist, die eine Sprachnachricht an einen Einsatzleiter oder einen sonstigen Kollegen übermitteln will. In der Regel kann der Empfänger sich relativ frei relativ zum Sender bewegen. Trotzdem führt die Erfindungen vielen Fällen dazu, dass der Empfänger die Sprachnachricht akustisch versteht.

Dank der Erfindung wird die Güte im Übertragungskanal automatisch gemessen und bei Bedarf verbessert. Insbesondere wird bei Bedarf die Audioqualität verbessert. Häufig lässt sich dank der Erfindung die Ausgabe-Sprachnachricht auch dann gut verstehen, wenn im Übertragungskanal nur eine relativ geringe Bandbreite zur Verfügung steht.

Dank der Erfindung ist es nicht erforderlich, dass ein Benutzer von Hand eine Einstellung des Übertragungskanals verändert. Insbesondere ist es in vielen Fällen nicht erforderlich, dass ein Servicetechniker vor Ort ist, um eine Einstellung vorzunehmen oder eine vorhandene Einstellung abzuändern. Weiterhin ist es nicht erforderlich, dass der Sender selber eine Einstellung verändert.

Der Übertragungskanal wird mithilfe der Signalverarbeitungseinheit und der beiden Funkgeräte realisiert. Erfindungsgemäß passt die Mess- und Justiereinheit automatisch die Signalverarbeitungseinheit bis zu einem gewissen Grad automatisch an die beiden Funkgeräte und an Umgebungsbedingungen an. Die beiden Funkgeräte brauchen dank der Erfindung nicht verändert zu werden. Auch eine Schnittstelle oder eine Koppelstelle zwischen der Signalverarbeitungseinheit und dem senderseitigen Funkgerät braucht nicht notwendigerweise einen bestimmten Standard zu erfüllen und braucht ebenfalls nicht angepasst zu werden. Ausreichend ist eine einzige Signalverarbeitungseinheit, die auf Seiten des Senders, auf Seiten des Empfängers oder räumlich entfernt sowohl vom Sender als auch vom Empfänger angeordnet sein kann.

Erfindungsgemäß reicht es vielmehr aus, die Übertragungskanal-Güte dadurch zu verbessern, dass dem oder mindestens einem Parameter der Signalverarbeitungseinheit jeweils ein zuvor berechneter Wert zugewiesen und dieser Parameterwert verwendet wird. Dieses Merkmal der Erfindung ist insbesondere dann von Vorteil, wenn die Signalverarbeitungseinheit und die Funkgeräte von mindestens zwei verschiedenen Herstellern stammen und / oder unterschiedliche Verfahren der Signalverarbeitung verwenden. Die Erfindung ist auch dann von Vorteil, wenn sich kein Parameter eines verwendeten Funkgeräts, der Einfluss auf eine Signalübertragung nimmt, und / oder kein Parameter einer Spracheingabeeinheit oder einer Sprachausgabeeinheit von außen verändern lässt.

Die Erfindung lässt sich mit relativ geringem Aufwand in eine vorhandene Übermittlungs-Vorrichtung integrieren, wobei die vorhandene Übermittlungs-Vorrichtung dazu ausgestaltet ist, eine Sprachnachricht zu übermitteln. In der Regel lassen sich die vorhandenen Geräte des Übertragungskanals, insbesondere die Signalverarbeitungseinheit und die beiden Funkgeräte, weiterverwenden. Die Mess- und Justiereinheit lässt sich in vielen Fällen mithilfe von Software auf einem Steuergerät oder auf der Signalverarbeitungseinheit oder einem sonstigen Rechner der Übermittlungs-Vorrichtung oder auf einer räumlich entfernten Recheneinheit realisieren. Um das Ausgangs-Testsignal am Übertragungskanal vorbei zur Mess- und Justiereinheit zu übermitteln, reicht es in vielen Fällen aus, ein Kabel zu ergänzen, welches sich auf der einen Seite mit dem empfängerseitigen Funkgerät oder der empfängerseitigen Sprachausgabeeinheit oder einem sonstigen empfängerseitigen Gerät und auf der anderen Seite mit der Mess- und Justiereinheit verbinden lässt. Dieses Kabel wird nur für das Justierverfahren benötigt, aber in der Regel nicht für die Übermittlung der Sprachnachricht.

Erfindungsgemäß wird das Ausgangs-Testsignal am Übertragungskanal vorbei zur Mess- und Justiereinheit übermittelt. In einer bevorzugten Ausgestaltung wird das Ausgangs-Testsignal unter Verwendung einer drahtgebundenen Verbindung von einem empfängerseitigen Gerät zurück zur Mess- und Justiereinheit übermittelt. Die drahtgebundene Verbindung wird bevorzugt unter Verwendung mindestens eines Kabels hergestellt. Das empfängerseitige Gerät ist das empfängerseitige Funkgerät oder ein sonstiges empfängerseitiges Gerät, wobei das sonstige empfängerseitige Gerät bezogen auf die Sprachnachricht flussabwärts vom empfängerseitigen Funkgerät angeordnet ist und ebenfalls das Ausgangs-Sprachnachricht-Signal und das Ausgangs-Testsignal empfängt. Die drahtgebundene Verbindung wird hergestellt, bevor das Eingangs-Testsignal generiert wird. Nachdem das Justierverfahren durchgeführt worden ist, wird die drahtgebundene Verbindung bevorzugt wieder entfernt. Die drahtgebundene Verbindung limitiert daher nicht den Vorgang, die Sprachnachricht vom Sender zum Empfänger zu übermitteln, und begrenzt bei dieser Übermittlung nicht die Position der Spracheingabeeinheit und der Funkgeräte relativ zueinander.

Das Ausgangs-Testsignal wird gemäß dieser Ausgestaltung also vom empfängerseitigen Gerät mithilfe einer drahtgebunden Verbindung zurück zur Mess- und Justiereinheit übermittelt. Diese Rückübermittlung verwendet bevorzugt keine Funkstrecke. In vielen Fällen wird daher das Ausgangs-Testsignal bei der Rückübermittlung nur wenig verändert. Die Mess- und Justiereinheit verwendet daher in vielen Fällen das rückübermittelte Signal als das Ausgangs-Testsignal oder braucht lediglich eine Standardverarbeitung des rückübermittelten Signals durchzuführen, um das Ausgangs-Testsignal zu erzeugen und die Güte des Übertragungskanals zu bewerten.

In einer Fortbildung dieser Ausgestaltung fungiert das empfängerseitige Funkgerät als das empfängerseitige Gerät. Das Ausgangs-Testsignal wird über eine drahtgebundene Verbindung zurück an die Mess- und Justiereinheit übermittelt. Bei dieser Ausgestaltung wird das Ausgangs-Testsignal ausschließlich über drahtgebundene Übermittlungselemente übermittelt. Bevorzugt gehört zu diesen drahtgebundenen Übermittlungselementen ein Kabel, welches das empfängerseitige Funkgerät mit der Mess- und Justiereinheit oder mit einem sonstigen Gerät verbindet. Dieses sonstige Gerät umfasst physikalisch die Mess- und Justiereinheit oder ist durch eine Signalleitung mit der Mess- und Justiereinheit verbunden. Dieses Kabel wird nur für das Justierverfahren verwendet, nicht aber dazu, um die Sprachnachricht zu übertragen. Um das Ausgangs-Testsignal zurück an die Mess- und Justiereinheit zu übermitteln, wird also keine Funkstrecke benötigt. Dadurch stimmt in vielen Fällen das rückübermittelte Signal ausreichend gut mit dem Ausgangs-Testsignal am Ausgang des empfängerseitigen Funkgerät überein.

In einer alternativen Fortbildung dieser Ausgestaltung wird als das empfängerseitige Gerät eine empfängerseitige Spracheingabeeinheit verwendet, insbesondere ein empfängerseitiges Mikrophon. Bevorzugt lässt sich diese empfängerseitige Spracheingabeeinheit einerseits für das Justierverfahren verwenden und andererseits dafür, dass der Empfänger umgekehrt eine nachfolgende Sprachnachricht an den Sender übermitteln kann, beispielsweise eine akustische Bestätigung, die Sprachnachricht vom Sender empfangen und akustisch verstanden zu haben.

Gemäß dieser alternativen Fortbildung wird das Ausgangs-Testsignal vom empfängerseitigen Funkgerät an die empfängerseitige Sprachausgabeeinheit übermittelt. Die empfängerseitige Sprachausgabeeinheit wandelt das Ausgangs-Testsignal in eine Testsignal-Sprachnachricht um. Die empfängerseitige Spracheingabeeinheit empfängt die Testsignal-Sprachnachricht und wandelt sie in ein Testsignal um. Dieses Testsignal wird unter Verwendung der drahtgebundenen Verbindung an die Mess- und Justiereinheit übermittelt. Die Mess- und Justiereinheit empfängt das übermittelte Testsignal und verwendet es als das Ausgangs-Testsignal. Optional bereitet die Mess- und Justiereinheit das empfangene Testsignal auf.

Die alternative Fortbildung vermeidet die Notwendigkeit, das empfängerseitige Funkgerät direkt mit einem drahtgebundenen Übermittlungselement verbinden zu müssen. In manchen Fällen ist dies mangels einer geeigneten Koppelstelle am Funkgerät nicht möglich.

Erfindungsgemäß berechnet die Mess- und Justiereinheit eine Bewertung der Güte des Übertragungskanals. In einer Ausgestaltung wird dieser Übertragungskanal als ein gedachtes System aufgefasst, das mit dem Eingangs-Testsignal angeregt wird und als Reaktion auf diese Anregung das Ausgangs-Testsignal erzeugt. In vielen Fällen lässt sich der Übertragungskanal als lineares zeitinvariantes System auffassen. Die Mess- und Justiereinheit berechnet und bewertet im Zeitbereich oder im Frequenzbereich ein Maß für ein Systemverhalten dieses Systems, insbesondere eine Übertragungsfunktion im Frequenzbereich. Die Mess- und Justiereinheit bewertet die Übertragungskanal-Güte abhängig von einer Auswertung des Maßes für das Systemverhalten. Beispielsweise leitet die Mess- und Justiereinheit einen Frequenzgang im Komplexen des gerade erwähnten gedachten Systems her. Diese Ausgestaltung ermöglicht es, bewährte Verfahren zur Systemanalyse anzuwenden.

Erfindungsgemäß wird eine Sprachnachricht von einer senderseitigen Spracheingabeeinheit zu einer empfängerseitigen Sprachausgabeeinheit übermittelt. Abhängig von der Eingabe-Sprachnachricht wird ein Sprachnachricht-Signal erzeugt und im Übertragungskanal übertragen. Durch das Justierverfahren wird ein Wert für einen veränderbaren Parameter der Signalverarbeitungseinheit berechnet und angewendet, optional jeweils ein Wert für mehrere Parameter. In einer Ausgestaltung wird zusätzlich eine weitere Sprachnachricht von einer weiteren senderseitigen Spracheingabeeinheit zu einer weiteren empfängerseitigen Sprachausgabeeinheit verwendet. Gemäß dieser Ausgestaltung übermittelt ein weiterer Sender (ein weiterer Mensch) die weitere Sprachnachricht an denselben Empfänger oder an einen weiteren Empfänger. Oder derselbe Sender (derselbe Mensch) übermittelt die weitere Sprachnachricht an einen weiteren Empfänger. Möglich ist, dass dieselbe Spracheingabeeinheit sowohl als die senderseitige Spracheingabeeinheit als auch als die weitere senderseitige Spracheingabeeinheit fungiert. Möglich ist alternativ, dass dieselbe Sprachausgabeeinheit sowohl als die empfängerseitige Sprachausgabeeinheit als auch die weitere empfängerseitige Sprachausgabeeinheit fungiert. Möglich ist auch, dass zwei verschiedene senderseitige Spracheingabeeinheiten und zwei verschiedene empfängerseitige Sprachausgabeeinheiten verwendet werden.

Gemäß dieser Ausgestaltung empfängt die weitere senderseitige Spracheingabeeinheit die zu übermittelnde weitere Sprachnachricht als weitere Eingabe-Sprachnachricht und wandelt sie in ein weiteres Eingangs-Sprachnachricht-Signal um. Das weitere Eingangs-Sprachnachricht-Signal wird an einen weiteren Übertragungskanal übermittelt und im weiteren Übertragungskanal übertragen. Der weitere Übertragungskanal gibt abhängig vom weiteren Eingangs-Sprachnachricht-Signal ein weiteres Ausgangs-Sprachnachricht-Signal aus, das an die weitere empfängerseitige Sprachausgabeeinheit übermittelt wird. Die weitere empfängerseitige Sprachausgabeeinheit empfängt das weitere Ausgangs-Sprachnachricht-Signal, wandelt es in eine weitere Ausgabe-Sprachnachricht um und gibt die weitere Ausgabe-Sprachnachricht akustisch aus.

Der weitere Übertragungskanal umfasst eine weitere Signalverarbeitungseinheit, ein weiteres senderseitiges Funkgerät und ein weiteres empfängerseitiges Funkgerät. Die weitere Signalverarbeitungseinheit ist ein anderes Gerät als die Signalverarbeitungseinheit. Bevorzugt sind die beiden Signalverarbeitungseinheiten zwei verschiedene Exemplare des gleichen Typs. Möglich ist, dass dasselbe Funkgerät sowohl als das senderseitige Funkgerät als auch als das weitere senderseitige Funkgerät fungiert. Möglich ist auch, dass dasselbe Funkgerät sowohl als das empfängerseitige Funkgerät als auch als das weitere empfängerseitige Funkgerät fungiert. Möglich ist auch, dass insgesamt vier verschiedene Funkgeräte verwendet werden.

Der Schritt, das weitere Eingangs-Sprachnachricht-Signal im weiteren Übertragungskanal zu übertragen, umfasst die folgenden Schritte:
- Die weitere Signalverarbeitungseinheit empfängt das weitere Eingangs-Sprachnachricht-Signal und verarbeitet es.
- Das verarbeitete weitere Eingangs-Sprachnachricht-Signal wird von der weiteren Signalverarbeitungseinheit an das weitere senderseitige Funkgerät und über eine weitere Funkstrecke von dem weiteren senderseitigen Funkgerät an das weitere empfängerseitige Funkgerät übertragen.
- Das weitere empfängerseitige Funkgerät gibt das weitere Ausgangs-Sprachnachricht-Signal aus.

Bevor die weitere Sprachnachricht übermittelt wird, werden die folgenden Schritte durchgeführt:
- Das erfindungsgemäße Justierverfahren wird durchgeführt. Hierbei berechnet die Mess- und Justiereinheit für mindestens einen veränderbaren Parameter der Signalverarbeitungseinheit einen Wert.
- Der oder mindestens ein, bevorzugt jeder Parameterwert, den die Mess- und Justiereinheit als ein Ergebnis des Justierverfahren berechnet hat, wird zusätzlich an die weitere Signalverarbeitungseinheit übermittelt.
- Veranlasst wird, dass der oder jeder übermittelte Wert für den jeweiligen Parameter der weiteren Signalverarbeitungseinheit verwendet wird, um die weitere Sprachnachricht zu übertragen.

Mit anderen Worten: Das Ergebnis des erfindungsgemäßen Justierverfahren wird nicht nur für die Signalverarbeitungseinheit, sondern zusätzlich für die weitere Signalverarbeitungseinheit angewendet. Diese Ausgestaltung erspart die Notwendigkeit, für die Übermittlung der weiteren Sprachnachricht ein weiteres Justierverfahren durchzuführen. In vielen Fällen ist es möglich, einmal vorab das Justierverfahren durchzuführen und den oder jeden berechneten Parameterwert auf jeden weiteren Übertragungskanal anzuwenden, der jeweils eine baugleiche Signalverarbeitungseinheit und zwei baugleiche Funkgeräte umfasst. "Baugleich" bezieht sich auf die beiden Übertragungskanäle.

In einer Ausgestaltung ist die empfängerseitige Sprachausgabeeinheit mit einer Betätigungseinheit verbunden, wobei ein Mensch diese Betätigungseinheit zu betätigen vermag. Der Schritt, dass die Betätigungseinheit betätigt wird, löst den Schritt aus, dass das Justierverfahren des erfindungsgemäßen Übermittlungs-Verfahrens ausgelöst wird. Diese Ausgestaltung ermöglicht folgendes Vorgehen: Eine Sprachnachricht wird im Übertragungskanal übermittelt, ohne dass notwendigerweise vorher das Justierverfahren durchgeführt wurde. Der Empfänger kann die Betätigungseinheit betätigen, falls er die empfangene Sprachnachricht akustisch nicht oder nicht sicher verstanden hat. Daraufhin wird das Justierverfahren durchgeführt, und der Sender kann erneut eine Sprachnachricht eingeben. Bevorzugt bewirkt die Betätigung der Betätigungseinheit zusätzlich, dass der Sender darüber informiert wird, dass der Empfänger die Betätigungseinheit betätigt hat. Diese Ausgestaltung reduziert das Risiko, dass der Empfänger eine Sprachnachricht vom Sender akustisch nicht oder nicht sicher versteht und der Sender dies nicht bemerkt.

In einer Ausgestaltung sind die senderseitige Spracheingabeeinheit, das senderseitige Funkgerät und die Signalverarbeitungseinheit Bestandteile einer senderseitigen persönlichen Schutzausrüstung. Diese persönliche Schutzausrüstung lässt sich von einem Menschen an seinem Körper tragen. Dieser Mensch ist beispielsweise ein Feuerwehrmann oder eine sonstige Rettungskraft, und zur persönlichen Schutzausrüstung gehören beispielsweise eine Atemschutzmaske und / oder ein Schutzhelm und / oder eine Schutzbekleidung. Das Übermittlungs-Verfahren wird durchgeführt, während dieser Mensch die senderseitige persönliche Schutzausrüstung an seinem Körper trägt. Dieser Mensch ist dann der Sender der Sprachnachricht. Möglich ist, dass zwei Menschen jeweils eine persönliche Schutzausrüstung an ihrem Körper tragen und unter Verwendung der Erfindung Sprachnachrichten miteinander austauschen.

In einer ersten Realisierungsform dieser Ausgestaltung gehört die Mess- und Justiereinheit ebenfalls zur senderseitigen persönlichen Schutzausrüstung. Das Justierverfahren wird durchgeführt, während der Mensch die persönliche Schutzausrüstung mit der Mess- und Justiereinheit an seinem Körper trägt.

In einer zweiten Realisierungsform dieser Ausgestaltung gehört die Mess- und Justiereinheit zu einer räumlich entfernten Recheneinheit. Wenigstens zeitweise ist eine Datenverbindung zwischen der persönlichen Schutzausrüstung und der Recheneinheit mit der Mess- und Justiereinheit hergestellt. Möglich ist, dass auch bei der zweiten Realisierungsform das Justierverfahren durchgeführt wird, während der Mensch die persönliche Schutzausrüstung an seinem Körper trägt.

Die erste Realisierungsform erspart die Notwendigkeit, eine Datenverbindung zwischen der senderseitigen persönlichen Schutzausrüstung und einer räumlich entfernten Recheneinheit herzustellen. Die zweite Realisierungsform ermöglicht es, eine leistungsfähige Recheneinheit zu verwenden und bereitzustellen. Dieselbe Mess- und Justiereinheit lässt sich nacheinander für verschiedene persönliche Schutzausrüstungen verwenden, auch unterschiedliche persönliche Schutzausrüstungen.

Weiterhin betrifft die Erfindung ein System mit der erfindungsgemäßen Übermittlungs-Anordnung, einer senderseitigen persönlichen Schutzausrüstung und optional einer empfängerseitigen persönlichen Schutzausrüstung.

Im Folgenden wird die Erfindung anhand eines Ausführungsbeispiels beschrieben. Hierbei zeigt
- Figur 1: beispielhaft eine Atemschutzmaske mit einer Kommunikationseinheit;
- Figur 2: schematisch die erfindungsgemäße Kommunikationseinheit und das erfindungsgemäße Verfahren;
- Figur 3: eine Abwandlung des Verfahrens von Figur 2;
- Figur 4: wie eine Kommunikationseinheit mit einer Mess- und Justiereinheit einen Satz von Parameterwerten generiert und eine weitere Kommunikationseinheit diesen Satz anwendet;
- Figur 5: eine Ausgestaltung, bei der die Mess- und Justiereinheit zu einer räumlich entfernten Recheneinheit gehört.

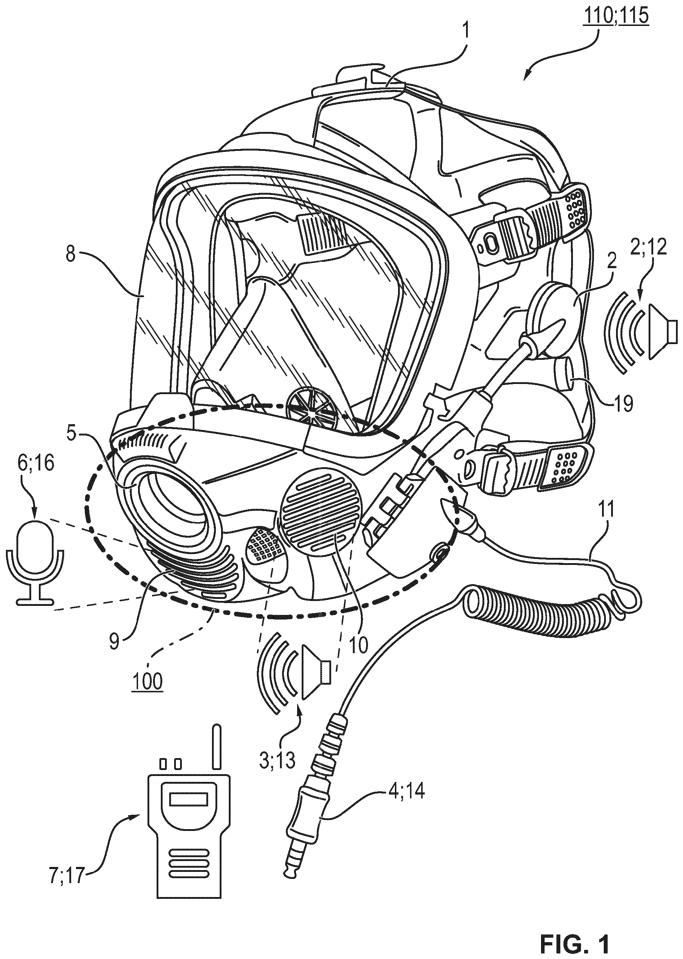

Die Erfindung wird am Beispiel einer Atemschutzmaske 110 erläutert, welche beispielhaft in Figur 1 gezeigt wird. Die Atemschutzmaske 110 lässt sich um den Kopf eines Benutzers legen und umgibt fluiddicht dessen Kopf. Der Benutzer ist beispielsweise ein Feuerwehrmann oder eine sonstige Rettungskraft oder auch ein Arbeiter in einer Produktionshalle.

Die Atemschutzmaske 110 ist mit einem nicht gezeigten Pressluftatmer für Atemluft verbunden. Der Benutzer trägt den Pressluftatmer beispielsweise auf seinem Rücken. Der Pressluftatmer führt durch einen nicht gezeigten Schlauch hindurch dem Benutzer Atemluft zu. Die Atemschutzmaske 110 verhindert, dass der Benutzer Umgebungsluft einatmet, welche mit Schadgasen oder Partikeln belastet sein kann.

Die Atemschutzmaske 110 umfasst folgende Bestandteile:
- eine Gesichtsmaske 1 mit Bebänderung, wobei die Gesichtsmaske 1 am Kopf des Benutzers anliegt,
- ein Ausatemventil 9 in der Gesichtsmaske 1,
- zwei Ohrhörer 2, die zusammen als eine senderseitige Sprachausgabeeinheit fungieren,
- einen Lautsprecher 3, der nachfolgend als "senderseitiger Lautsprecher" bezeichnet wird,
- einen Bereich 10 vor dem Lautsprecher 3, der für Gas undurchlässig und für Schallwellen durchlässig ist,
- einen Anschluss 4 für ein Funkgerät,
- ein Kabel 11 für den Anschluss 4, das als "senderseitiges Kabel" bezeichnet wird,
- einen Anschluss 5 für den nicht gezeigten Pressluftatmer,
- ein Mikrophon 6, das nachfolgend als "senderseitiges Mikrophon" bezeichnet wird und als die senderseitige Spracheingabeeinheit fungiert, und
- ein verschwenkbares Visier 8, das sich vor dem Gesicht des Benutzers befindet.

Die Ohrhörer 2, der Lautsprecher 3 und das Mikrophon 6 werden zusätzlich durch Symbole dargestellt.

An den Anschluss 4 lässt sich ein Funkgerät 7 anschließen, welches als "senderseitiges Funkgerät" bezeichnet wird und ebenfalls symbolisch gezeigt wird. Der Benutzer trägt das senderseitige Funkgerät 7 an seiner Schutzkleidung, beispielsweise an seinem Schutzhelm (nicht gezeigt).

Der Benutzer der Atemschutzmaske 110 wird nachfolgend als der "Sender" bezeichnet. Der Sender kann eine Sprachnachricht in das senderseitige Mikrophon 6 eingeben. Der senderseitige Lautsprecher 3 vermag eine Sprachnachricht des Senders akustisch in die unmittelbare Umgebung der Atemschutzmaske 110 auszugeben.

Die Sprachnachricht wird außerdem vom Sender an einen räumlich entfernten Empfänger übermittelt, was nachfolgend beschrieben wird. Der Empfänger ist ein Kollege des Senders, beispielsweise ein Einsatzleiter. In einer Ausgestaltung trägt der Empfänger eine gleichartige Atemschutzmaske 115. Die Atemschutzmaske 115 des Empfängers umfasst
- zwei Ohrhörer, die zusammen als die empfängerseitige Sprachausgabeeinheit 12 fungieren,
- eine Betätigungseinheit 19 in der Nähe eines der Ohrhörer 12,
- einen empfängerseitigen Lautsprecher 13,
- ein empfängerseitiges Mikrophon 16,
- einen Anschluss 14 und
- ein empfängerseitiges Funkgerät 17, das sich an den Anschluss 14 anschließen lässt.

Die beiden Funkgeräte 7, 17 können baugleich sein oder sich voneinander unterscheiden. Die entsprechenden Bezugszeichen der Atemschutzmaske 115 sind ebenfalls in Figur 1 eingetragen.

Der Empfänger kann umgekehrt in das empfängerseitige Mikrophon 16 eine Sprachnachricht eingeben. Die Sprachnachricht wird an den Sender übermittelt und von der senderseitigen Sprachausgabeeinheit 2 ausgegeben.

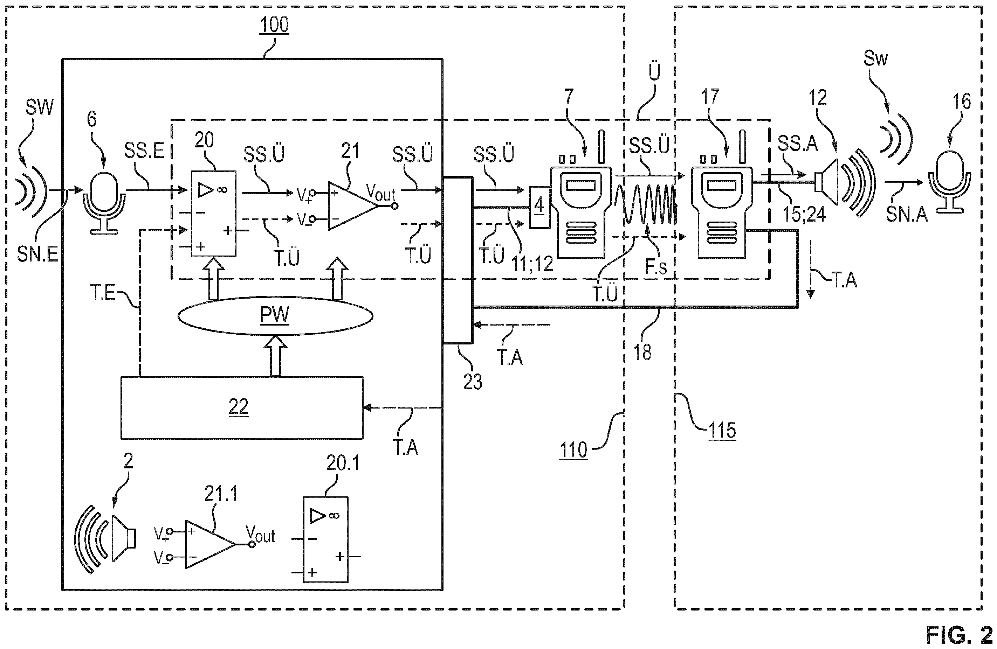

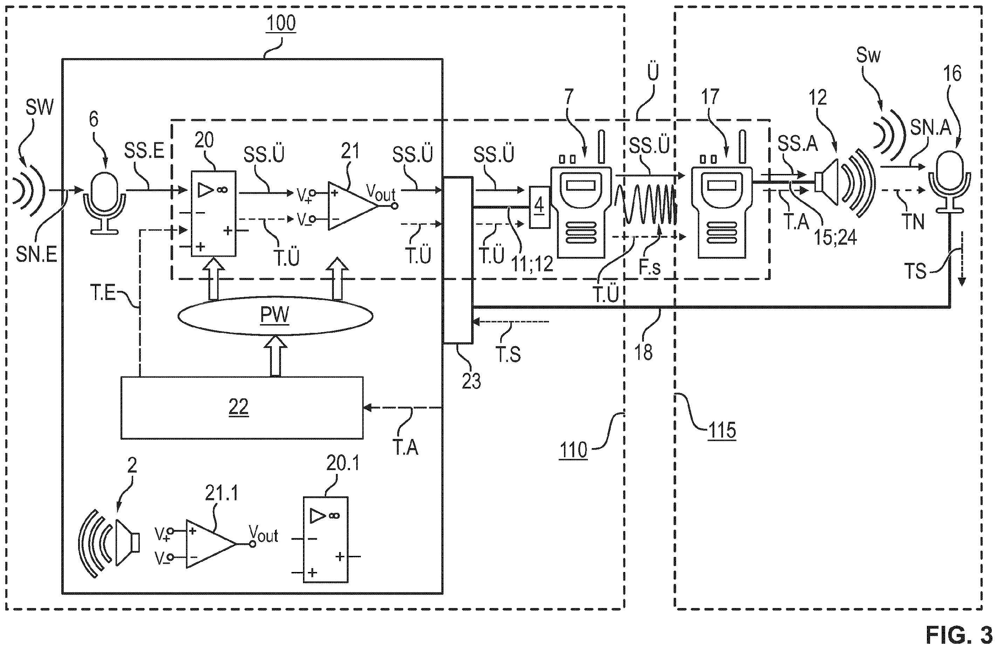

Figur 2 und Figur 3 veranschaulichen, wie eine Sprachnachricht vom Sender, also vom Benutzer der Atemschutzmaske 110 an den räumlich entfernten Empfänger übermittelt wird.

In Figur 2, Figur 3 und Figur 4 wird schematisch ein Übertragungskanal Ü (Übertragungsstrecke) gezeigt, in dem ein Signal übertragen wird, welches aus der eingegebenen Sprachnachricht erzeugt wird. Dieser Übertragungskanal Ü umfasst eine Abfolge mit folgenden Geräten:
- einen Entzerr-Vorverstärker 20 und einen Verstärker 21, die zusammen zu der (senderseitigen) Signalverarbeitungseinheit im Sinne der Patentansprüche gehören,
- das senderseitige Funkgerät 7 und
- das empfängerseitige Funkgerät 17.

Der Sender gibt die Sprachnachricht akustisch in das senderseitige Mikrophon 6 ein. Diese Sprachnachricht wird als Eingabe-Sprachnachricht SN.E bezeichnet. Schematisch werden in Figur 2 und Figur 3 Schallwellen Sw gezeigt. Das senderseitige Mikrophon 6 erzeugt aus der Eingabe-Sprachnachricht SN.E ein elektronisches Eingangs-Sprachnachricht-Signal SS.E. Dieses Eingangs-Sprachnachricht-Signal SS.E wird an den Übertragungskanal Ü übermittelt und im Übertragungskanal Ü übertragen. Der Übertragungskanal Ü gibt als Ergebnis der Übertragung ein Ausgangs-Sprachnachricht-Signal SS.A aus. Das Sprachnachricht-Signal im Übertragungskanal Ü wird mit SS.Ü bezeichnet. Die empfängerseitige Sprachausgabeeinheit 12 empfängt das Ausgangs-Sprachnachricht-Signal SS.A und gibt per Schallwellen Sw die Ausgabe-Sprachnachricht SN.A aus. Idealerweise stimmt die Eingabe-Sprachnachricht SN.E mit der Ausgangs-Sprachnachricht-Signal SS.A überein.

Die Übertragung im Übertragungskanal Ü umfasst folgende Schritte:
- Der Entzerr-Vorverstärker 20 entzerrt das Eingangs-Sprachnachricht-Signal SS.E.
- Der Verstärker 21 verstärkt das Signal.
- Das dergestalt verarbeitete Signal wird per Kabel an eine senderseitige Schnittstelle (Koppelstelle) 23 und per Kabel oder auch per Bluetooth oder auf eine andere drahtlose Weise weiter an das senderseitige Funkgerät 7 übermittelt.
- Das senderseitige Funkgerät 7 übermittelt das verarbeitete Sprachnachricht-Signal SS.Ü in einer Funkstrecke Fs mittels Funkwellen (Radiowellen) an das empfängerseitige Funkgerät 17.
- Das empfängerseitige Funkgerät 17 gibt das Ausgabe-Sprachnachricht-Signal SS.A aus.
- Das ausgegebene Signal SS.A wird über ein empfängerseitiges Kabel 15 oder eine Bluetooth-Verbindung 24 an die empfängerseitige Sprachausgabeeinheit 12 übermittelt.
- Die empfängerseitige Sprachausgabeeinheit 12 wandelt das empfangene Signal SS.A wieder in eine Sprachnachricht um und gibt diese akustisch an den Empfänger aus. Die ausgegebene Sprachnachricht wird als Ausgabe-Sprachnachricht SN.A bezeichnet und stimmt idealerweise mit der Eingabe-Sprachnachricht SN.E überein.

Auf einem entsprechenden Weg gelangt umgekehrt eine Sprachnachricht vom Empfänger über das empfängerseitige Mikrophon 16, das empfängerseitige Funkgerät 17, das senderseitige Funkgerät 7 und der senderseitigen Sprachausgabeeinheit 2 zum Sender. Gezeigt werden ein weiterer Verstärker 21.1 und ein weiterer Entzerr-Vorverstärker 20.1, welche empfangene Sprachnachrichten verarbeiten. Das senderseitige Mikrophon 6 und der senderseitige Lautsprecher 3 können Bestandteile eines senderseitigen Kopfhörers sein. Entsprechend können das empfängerseitige Mikrophon 16 und die empfängerseitige Sprachausgabeeinheit 12 Bestandteile eines empfängerseitigen Kopfhörers sein.

Der senderseitige Lautsprecher 3, das senderseitige Mikrophon 6, die beiden Entzerr-Vorverstärker 20, 20.1 die beiden Verstärker 21, 21.1 und die Schnittstelle 23 gehören zu einer Kommunikationseinheit 100, die in einer Realisierungsform als ein Bauteil ausgestaltet oder zu einem Bauteil gehört. In einer anderen Realisierungsform sind Teile der Kommunikationseinheit 100 durch Software realisiert, wobei diese Software beim Einsatz auf einem Prozessor abläuft. In einer Realisierungsform ist das Bauteil mit der Kommunikationseinheit 100 an der Atemschutzmaske 110 befestigt, beispielsweise lösbar mit einem Rastverschluss, oder in die Atemschutzmaske 110 integriert. Möglich ist auch, dass das Bauteil mit der Kommunikationseinheit 100 sich an der Schutzbekleidung des Benutzers (Senders) befestigen lässt.

Diese Kommunikationseinheit 100 wird in Figur 1 schematisch durch eine Ellipse und in Figur 2 und Figur 3 schematisch durch ein Rechteck gezeigt. Das senderseitige Funkgerät 7 lässt sich lösbar mit dieser Kommunikationseinheit 100 verbinden, und zwar mithilfe des Kabels 11 und des Anschlusses 4, der in Figur 1 gezeigt wird, oder einer Bluetooth-Verbindung 24 oder auch wahlweise mit dem Kabel 11 und dem Anschluss 4 oder die Bluetooth-Verbindung 24.

Offensichtlich ist es wichtig, dass der Empfänger eine Sprachnachricht des Senders akustisch gut verstehen kann, idealerweise jedes Wort, auch wenn erhebliche Umgebungsgeräusche auftreten und Störgrößen auf den Übertragungskanal Ü einwirken können. Diese Wirkung soll auch dann erzielt werden, wenn die Kommunikationseinheit 100 und die Funkgeräte 7 und 17 von unterschiedlichen Herstellern stammen und / oder unterschiedliche Übertragungsverfahren anwenden. Daher führt die Kommunikationseinheit 100 vorab ein automatisches Justierverfahren (automatic set-up) durch. Bevorzugt lässt die Kommunikationseinheit 100 sich wahlweise in einem Einsatz-Modus betreiben, in dem einen Sender eine Sprachnachricht an einen Empfänger übermitteln kann, sowie in einem Einstellmodus, in dem das automatische Justierverfahren durchgeführt wird.

In einer Ausgestaltung ist an der Atemschutzmaske 115 die Betätigungseinheit 19 angebracht, die in Figur 1 schematisch gezeigt wird. Falls der Benutzer der Atemschutzmaske 115, also der Empfänger, die Betätigungseinheit 19 betätigt, wird der Schritt ausgelöst, ein Justierverfahren durchzuführen. Diese Ausgestaltung ermöglicht es dem Benutzer der Atemschutzmaske 115, dem Sender mitzuteilen, dass er eine Sprachnachricht akustisch schlecht verstanden hat. Durch das Justierverfahren wird in vielen Fällen ein Parameterwert der Kommunikationseinheit 100 verändert, und eine nachfolgende Sprachnachricht wird besser verstanden.

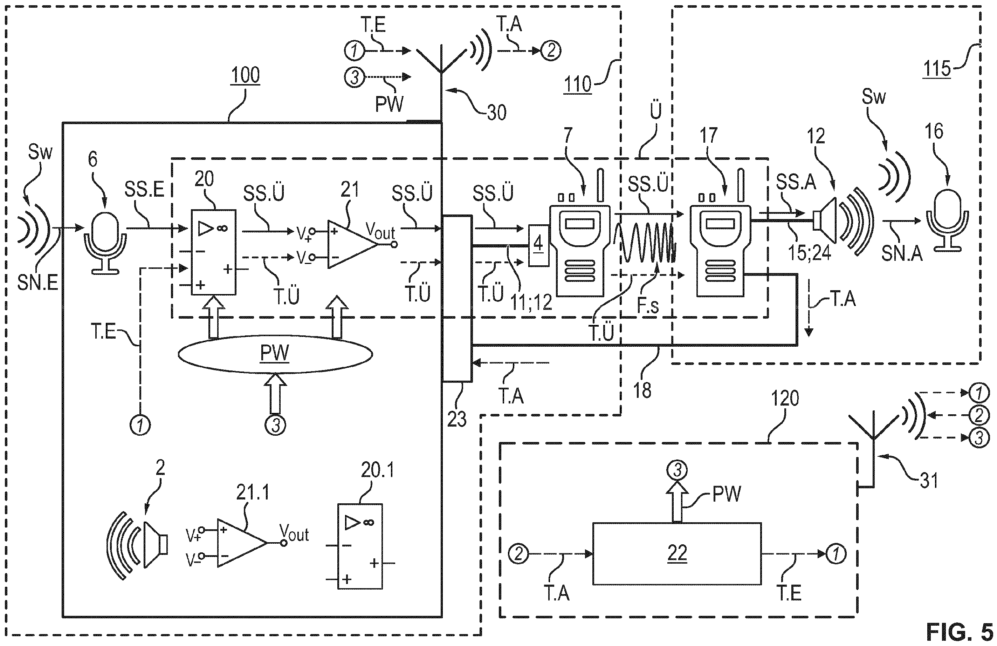

Die Übermittlungs-Anordnung umfasst eine schematisch gezeigte signalverarbeitende Mess- und Justiereinheit 22. In einer Ausgestaltung ist die Mess- und Justiereinheit 22 ein Bestandteil der Kommunikationseinheit 100, vgl. Figur 2 bis Figur 4. Die Mess- und Justiereinheit 22 kann auch räumlich von der Kommunikationseinheit 100 getrennt sein. Beispielsweise ist die Mess- und Justiereinheit 22 auf einer räumlich entfernten Recheneinheit 120 realisiert, vgl. Figur 5, insbesondere per Software, und ist mit der Kommunikationseinheit 100 verbunden, bevorzugt durch eine drahtlose Datenverbindung. Diese Realisierungsform ermöglicht es, dieselbe Mess- und Justiereinheit 22 nacheinander für verschiedene Kommunikationseinheiten 100 zu verwenden, und ermöglicht es außerdem, einen leistungsfähigeren Prozessor für die Mess- und Justiereinheit 22 einzusetzen, verglichen mit einer Ausgestaltung, bei der die Mess- und Justiereinheit 22 ein Bestandteil der Kommunikationseinheit 100 ist.

Während das automatische Justierverfahren durchgeführt wird, generiert die Mess- und Justiereinheit 22 ein Eingangs-Testsignal T.E, bevorzugt ein Signal, welches in einer Realisierungsform idealerweise die Form eines weißen Rauschens hat. Dieses Eingangs-Testsignal T.E wird in den Übertragungskanal Ü eingespeist. Das eingespeiste Eingangs-Testsignal T.E wird im Übertragungskanal Ü übertragen. Das Testsignal im Übertragungskanal Ü wird mit T.Ü bezeichnet. Es wird genauso wie das Sprachnachricht-Signal im Übertragungskanal Ü übertragen und hierbei vom Entzerr-Vorverstärker 20 und vom Verstärker 21 verarbeitet und dann an das empfängerseitige Funkgerät 17 übermittelt, und zwar über die Schnittstelle 23 und das senderseitige Funkgerät 7 und die Funkstrecke Fs. Zur Unterscheidung wird in Figur 2, Figur 3, Figur 4 und Figur 5 das Sprachnachricht-Signal SS.E, SS.Ü, SS.A mit durchgezogenen Pfeilen dargestellt, das Testsignal T.E, T.Ü, T.A mit gestrichelten Pfeilen.

Bevorzugt wird das Testsignal T.Ü vom senderseitigen Funkgerät 7 an das empfängerseitige Funkgerät 17 per DMO (direct mode operation) über die Funkstrecke Fs übermittelt, wobei DMO eine mögliche Einstellung eines handelsüblichen Funkgeräts ist. Diese Einstellung wird von einem Benutzer oder auch automatisch vorgenommen, während das automatische Justierverfahren durchgeführt wird. Dieser Modus reduziert die Gefahr, dass Störgrößen die Funkstrecke Fs vom Funkgerät 7 zum Funkgerät 17 erheblich beeinflussen.

Das empfängerseitige Funkgerät 17 gibt ein Ausgangs-Testsignal T.A aus. Das Ausgangs-Testsignal T.A wird am Übertragungskanal Ü vorbei zurück an die Mess- und Justiereinheit 22 übermittelt.

Figur 2 zeigt eine erste Ausgestaltung, wie das Ausgangs-Testsignal T.A am Übertragungskanal Ü vorbei zurück zur Mess- und Justiereinheit 22 übermittelt wird. Figur 3 zeigt eine zweite Ausgestaltung.

Bei beiden Ausgestaltungen wird eine drahtgebundene Verbindung in Form eines Kabels 18 an die Kommunikationseinheit 100 angeschlossen - genauer gesagt: an die senderseitige Schnittstelle 23. Durch dieses Kabel 18 hindurch wird das Ausgangs-Testsignal T.A am Übertragungskanal Ü vorbei zur Kommunikationseinheit 100 und in dieser zur Mess- und Justiereinheit 22 zurück übermittelt. Bevorzugt wird dieses Kabel 18 mit der Kommunikationseinheit 100 verbunden, bevor die Mess- und Justiereinheit 22 das Eingangs-Testsignal T.E generiert. Nachdem das Justierverfahren beendet ist, wird das Kabel 18 bevorzugt wieder entfernt. Bevorzugt wird das Kabel 18 nur für das Justierverfahren benutzt, aber nicht im laufenden Einsatz. Daher limitiert das Kabel 18 nicht den Abstand, der während eines Einsatzes zwischen dem Sender und dem Empfänger auftreten kann.

Bei der ersten Ausgestaltung gemäß Figur 2 wird das empfängerseitige Funkgerät 17 mit der senderseitigen Schnittstelle 23 verbunden. Das Ausgangs-Testsignal T.A wird vom empfängerseitigen Funkgerät 17 durch das Kabel 18 hindurch zur senderseitigen Schnittstelle 23 übermittelt und von dort weiter zur Mess- und Justiereinheit 22. Die empfängerseitige Sprachausgabeeinheit 12 und das empfängerseitige Mikrophon 16 werden bei der ersten Ausgestaltung nicht verwendet, um das Testsignal T.A zu übertragen.

Bei der zweiten Ausgestaltung gemäß Figur 3 ist das empfängerseitige Mikrophon 16 mittels des Kabels 18 mit der senderseitigen Schnittstelle 23 verbunden. Das Ausgangs-Testsignal T.A wird an die empfängerseitige Sprachausgabeeinheit 12 übermittelt. Die empfängerseitige Sprachausgabeeinheit 12 erzeugt aus dem Ausgangs-Testsignal T.A eine Testsignal-Sprachnachricht TN und gibt die Testsignal-Sprachnachricht TN akustisch aus. Die ausgegebene Testsignal-Sprachnachricht TN wird per Schallwellen Sw an das empfängerseitige Mikrophon 16 übermittelt. Das empfängerseitige Mikrophon 16 wandelt die empfangene Testsignal-Sprachnachricht TN in ein Testsignal TS um. Dieses Testsignal TS wird mittels des Kabels 18 an die senderseitige Schnittstelle 23 und weiter zur Mess- und Justiereinheit 22 übermittelt. Die Mess- und Justiereinheit 22 verwendet das empfangene Testsignal TS als das Ausgangs-Testsignal T.A, optional nach einer Signalaufbereitung und / oder Vorverarbeitung.

Die Mess- und Justiereinheit 22 analysiert bei beiden Ausgestaltungen automatisch das empfangene Ausgangs-Testsignal T.A. Abhängig vom Analyseergebnis verändert die Mess- und Justiereinheit 22 bei Bedarf automatisch Werte von veränderbaren Parametern der Kommunikationseinheit 100, insbesondere von mindestens einem Parameter, der die Verstärkung oder Dämpfung, die Entzerrung, den Pegel und / oder die Einstellung von Audiofiltern festlegt. Insbesondere verändert die Mess- und Justiereinheit 22 hierbei Werte von Parametern des Entzerr-Vorverstärkers 20 und / oder des Verstärkers 21. Ein Ziel bei der Veränderung ist, Rückkoppelung, Übersteuerung und / oder Clipping (Abschneiden von betragsgroßen Amplituden) zu reduzieren.

Die Mess- und Justiereinheit 22 speist also ein Eingangs-Testsignal T.E in den Übertragungskanal Ü ein und empfängt das Ausgangs-Testsignal T.A, welches am Ausgang des Übertragungskanals Ü erzeugt wird. Weil für die Übermittlung des Ausgangs-Testsignals T.A zurück an die Mess- und Justiereinheit 22 das Kabel 18 verwendet wird und nicht die Funkstrecke Fs zwischen den beiden Funkgeräten 7 und 17, wird das Ausgangs-Testsignal T.A bei der Rückübermittlung nur relativ wenig verändert, verglichen mit einer drahtlosen Übermittlung im Übertragungskanal Ü.

Der Übertragungskanal Ü lässt sich in vielen Fällen als ein System auffassen, welches vom Eingangs-Testsignal T.E angeregt wird und als Reaktion auf diese Anregung das Ausgangs-Testsignal T.A liefert. Die Mess- und Justiereinheit 22 berechnet ein Maß für das Systemverhalten dieses Systems. In vielen Fällen lässt sich dieses System mit ausreichender Genauigkeit als ein lineares zeitinvariantes System auffassen. Insbesondere dann, wenn die Mess- und Justiereinheit 22 ein Eingangs-Testsignal T.E in Form eines weißen Rauschens generiert, lässt sich das Eingangs-Testsignal T.E als eine Impulsanregung und das Ausgangs-Testsignal T.A als eine Impulsantwort des Systems auffassen. Bei einer anderen Realisierungsform wird eine Sprachnachricht übermittelt, eine Sprachdatei ausgegeben und diese Sprachdatei mithilfe mindestens eines Qualitätsmaßes bewertet.

Bei der Ausgestaltung mit dem linearen zeitinvarianten System berechnet die Mess- und Justiereinheit 22 den Frequenzgang und analysiert den Amplitudengang und / oder den Phasengang. Durch diese Analyse bewertet die Mess- und Justiereinheit 22 im Frequenzbereich automatisch die Güte des Übertragungskanals Ü. Beispielsweise ist ein Soll-Frequenzgang vorgegeben. Die Mess- und Justiereinheit 22 verändert Parameterwerte mit dem Ziel, dass der tatsächliche Frequenzgang gleich dem vorgegebenen Soll-Frequenzgang ist - in der Praxis: ausreichend wenig vom Soll-Frequenzgang abweicht. In einer Ausgestaltung verändert die Mess- und Justiereinheit 22 Parameterwerte dergestalt, dass eine lineare Entzerrung durchgeführt wird, wobei für diese Entzerrung die Inverse der Impulsantwort verwendet wird. Möglich ist, den Frequenzgang nur in solchen Bereichen auszuwerten und für eine Veränderung von Parameterwerten zu verwenden, in denen der tatsächliche Frequenzgang stärker als eine vorgegebene Toleranz vom vorgegebenen soll Frequenzgang abweicht.

Dank der Erfindung ist es in vielen Fällen nicht erforderlich, einem Parameter eines Funkgeräts 7, 17 einen anderen Wert zuzuweisen. Dies ist von Vorteil, weil es in vielen Fällen nicht möglich oder zumindest schwer ist, automatisch ein Funkgerät 7, 17 von außen anzusteuern und dadurch einen Funkgeräte-Parameter zu verändern. Die Erfindung ermöglicht es, vermeidet aber in der Regel die Notwendigkeit, dass ein Benutzer manuell ein Funkgerät 7, 17 anders einstellen muss. Vielmehr wird erfindungsgemäß die Kommunikationseinheit 100 automatisch an die verwendeten Funkgeräte 7, 17 angepasst. Dank der Erfindung ist es auch nicht notwendig, einen bestimmten Standard für die senderseitige Schnittstelle 23 vorzuschreiben.

Die Mess- und Justiereinheit 22 erzeugt in einer Realisierungsform einen Satz PW von Parameterwerten. Dieser Satz PW von Parameterwerten legt Einstellungen für Bestandteile der Kommunikationseinheit 100 fest und führt in vielen Fällen zu einem ausreichend guten Übertragungskanal Ü, idealerweise zu einem Übertragungskanal Ü, dessen tatsächlicher Frequenzgang gleich dem vorgegebenen Soll-Frequenzgang ist.

Möglich ist, dass ein Anwender das gerade beschriebene automatische Justierverfahren für jede Kommunikationseinheit 100 und jedes Funkgerät 7, 17, welches sich zusammen mit der Kommunikationseinheit 100 verwenden lässt, erneut durchführen lässt. Bevorzugt führt der Anwender hingegen das gerade beschriebene Justierverfahren einmal für ein Exemplar der Kommunikationseinheit 100 und jeweils ein Exemplar der beiden Funkgeräte 7 und 17 durch. Der Satz PW von Parameterwerten, der auf diese Weise generiert wird, wird dann an alle baugleichen Kommunikationseinheiten 100 übermittelt und abgespeichert und lässt sich immer dann verwenden, wenn eine solche Kommunikationseinheit 100 in Verbindung mit Funkgeräten 7, 17 verwendet wird, die baugleich zu denjenigen beiden Funkgeräten 7, 17 sind, die beim Justierverfahren verwendet werden.

Die Mess- und Justiereinheit 22 ist in der Ausführungsform gemäß Figur 2 bis Figur 4 ein Bestandteil der Kommunikationseinheit 100. Sie kann auch außerhalb der Kommunikationseinheit 100 angeordnet sein, vgl. Figur 5.

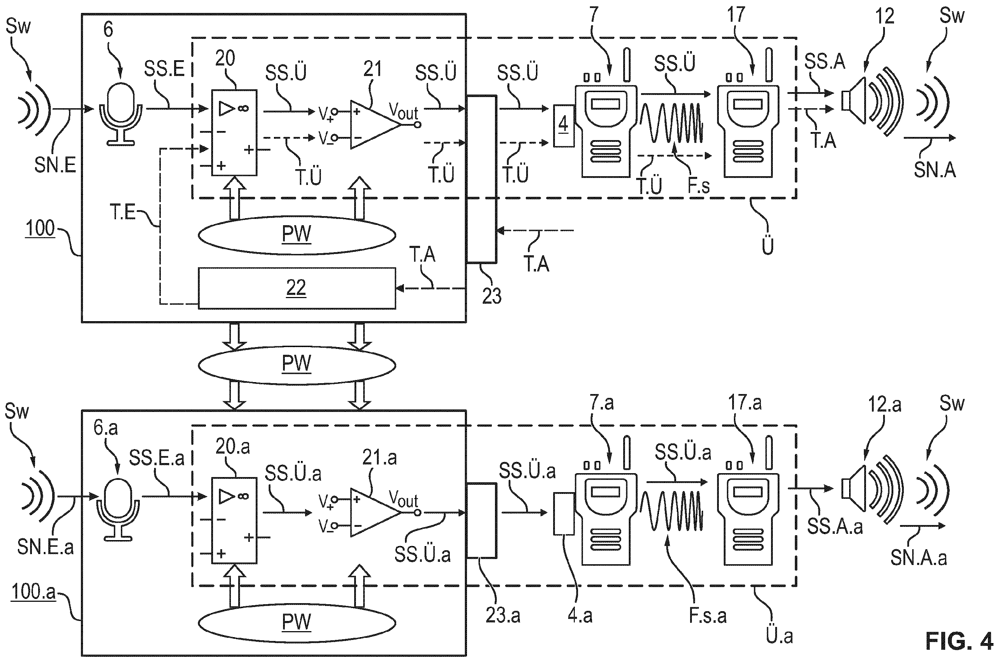

Figur 4 veranschaulicht, wie die Mess- und Justiereinheit 22 der Kommunikationseinheit 100 einen Satz PW von Parametern generiert. Dieser Satz PW von Parameterwerten wird an die Kommunikationseinheit 100 und an eine baugleiche weitere Kommunikationseinheit 100.a übermittelt. Die weitere Kommunikationseinheit 100.a umfasst ebenfalls ein Mikrophon 6.a, einen Entzerr-Vorverstärker 20.a und einen Verstärker 21.a sowie eine Schnittstelle 23.a. Ein Benutzer (Sender) kann eine Sprachnachricht eingeben, die als weitere Eingabe-Sprachnachricht SN.E.a bezeichnet wird. Das weitere Mikrophon 6.a wandelt die weitere Eingabe-Sprachnachricht SN.E.a in ein weiteres Eingabe-Sprachnachricht-Signal SS.E.a um. Dieses Signal SS.E.a wird von der weiteren Kommunikationseinheit 100.a über ein weiteres senderseitiges Funkgerät 7.a und ein weiteres empfängerseitiges Funkgerät 17.a an eine weitere empfängerseitige Sprachausgabeeinheit 12.a übermittelt. Eine Ausgabe-Sprachnachricht SN.A.a wird an einen Empfänger ausgegeben. Die beiden weiteren Funkgeräte 7.a und 17.a sind durch eine weitere Funkstrecke Fs.a miteinander verbunden. Die Bauteile 20.a, 21.a, 7.a, 17.a gehören zu einem weiteren Übertragungskanal Ü.a. Das weitere Sprachnachricht-Signal im weiteren Übertragungskanal Ü.a wird mit SS.Ü.a bezeichnet. Die weitere empfängerseitige Sprachausgabeeinheit 12.a gibt abhängig vom weiteren Sprachnachricht-Signal SS.Ü.a die Ausgabe-Sprachnachricht SS.A.a aus.

Bevor die weitere Sprachnachricht übertragen wird, werden folgende Schritte durchgeführt: Die weitere Kommunikationseinheit 100.a empfängt von der Kommunikationseinheit 100 den Satz PW von Parameterwerten und wendet diesen auf die Bauteile 20.a und 21.a an. Die weitere Kommunikationseinheit 100.a umfasst nicht notwendigerweise eine eigene Mess- und Justiereinheit 22. In vielen Fällen reicht es aus, wenn eine Kommunikationseinheit 100 eine Mess- und Justiereinheit 22 umfasst, die so wie gerade beschrieben einen Satz PW von Parameterwerten erzeugt, und alle übrigen Kommunikationseinheiten 100.a, ... den Satz PW von Parameterwerten empfangen und anwenden.

In vielen Fällen sind die beiden Funkgeräte 7 und 17, die für die Übertragung im Übertragungskanal Ü verwendet werden, baugleich. Insbesondere in diesem Fall lässt sich häufig folgende Ausgestaltung des Verfahrens verwenden: In einem Datenspeicher der Kommunikationseinheit 100 sind Sätze PW von Parameterwerten abgespeichert. Jeder Satz PW bezieht sich auf jeweils ein Funkgerät, welches mit der Kommunikationseinheit 100 verbindbar ist und dann als senderseitiges Funkgerät fungiert. Jeder Satz PW wurde vorab erzeugt, indem das Justierverfahren einmal mit einem Exemplar dieses Funkgeräts als dem senderseitigen Funkgerät angewendet wurde.

Bei einem Einsatz erkennt die Kommunikationseinheit 100 automatisch, von welchen Typ das angeschlossene senderseitige Funkgerät 7 ist. Insbesondere dann, wenn die Verbindung zwischen der Kommunikationseinheit 100 und dem senderseitigen Funkgerät 7 über eine Bluetooth-Verbindung 24 oder eine sonstige drahtlose Verbindung hergestellt ist, vermag häufig die Kommunikationseinheit 100 automatisch den Typ des Funkgeräts 7 zu erkennen. Sobald die Kommunikationseinheit 100 erkannt hat, von welchem Typ das angeschlossene senderseitige Funkgerät 7 ist, wählt die Kommunikationseinheit 100 automatisch den zugeordneten Satz PW von Parameterwerten aus und wendet diesen auf die Bestandteile 20, 21 an. Diese Ausgestaltung erspart die Notwendigkeit, jedes Mal dann erneut das oben beschriebene Justierverfahren durchführen zu müssen, wenn ein senderseitiges Funkgerät von einem anderen Typ verwendet wird.

In der Ausgestaltung gemäß Figur 2 bis Figur 4 ist die Mess- und Justiereinheit 22 ein Bestandteil der Kommunikationseinheit 100 und damit der Atemschutzmaske 110. Figur 5 zeigt eine abweichende Ausgestaltung, bei der die Mess- und Justiereinheit 22 ein Bestandteil einer räumlich entfernten Recheneinheit 120 ist. Gleiche Bezugszeichen haben in Figur 5 die gleiche Bedeutung wie in Figur 2 bis Figur 4.

Wenigstens zeitweise ist zwischen der Kommunikationseinheit 100 und der Recheneinheit 120 eine bidirektionale Datenverbindung mittels Funkwellen hergestellt. Beispielhaft sind eine Antenne 30 der Kommunikationseinheit 100 sowie eine Antenne 31 der Recheneinheit 120 dargestellt. Das Justierverfahren umfasst bei der Ausgestaltung gemäß Figur 5 die folgenden Schritte:
- Das generierte Eingangs-Testsignal T.E wird von der Recheneinheit 120 an die Kommunikationseinheit 100 übermittelt.
- Das Eingangs-Testsignal T.E wird im Übertragungskanal Ü übermittelt, was ein Ausgangs-Testsignal T.A liefert.
- Das Ausgangs-Testsignal T.A wird von der Kommunikationseinheit 100 zurück an die Recheneinheit 120 übermittelt.
- Die Mess- und Justiereinheit 22 generiert einen Satz mit Parameterwerten PW
- Der generierte Satz mit Parameterwerten PW wird von der Recheneinheit 120 an die Kommunikationseinheit 100 übermittelt.

**Bezugszeichenliste**

| | |
|---|---|
| 1 | Gesichtsmaske mit Bebänderung der Atemschutzmaske 110 |
| 2 | Ohrhörer der Atemschutzmaske 110, fungieren zusammen als eine senderseitige Sprachausgabeeinheit |
| 3 | senderseitiger Lautsprecher der Atemschutzmaske 110, hinter dem Bereich 10 angeordnet |
| 4 | Anschluss an der Atemschutzmaske 110 für das Funkgerät 7 |
| 4.a | Anschluss für das weitere Funkgerät 7.a |
| 5 | Anschluss an der Atemschutzmaske 110 für einen Pressluftatmer |
| 6 | senderseitiges Mikrophon der Atemschutzmaske 110, fungiert als die senderseitige Spracheingabeeinheit, hinter dem Ausatemventil 9 angeordnet |
| 6.a | weiteres senderseitiges Mikrophon, fungiert als die weitere senderseitige Spracheingabeeinheit |
| 7 | senderseitiges Funkgerät, lässt sich an den Anschluss 4 anschließen |
| 7.a | weiteres senderseitiges Funkgerät, lässt sich an den Anschluss 4.a anschließen |
| 8 | Visier der Atemschutzmaske 110 |
| 9 | Ausatemventil in der Gesichtsmaske 1, vor dem sendeseitigen Mikrophon 6 angeordnet |
| 10 | für Schallwellen durchlässige und für Gas undurchlässiger Bereich in der Gesichtsmaske 1, vor dem Lautsprecher 3 angeordnet |
| 11 | senderseitiges Kabel der Atemschutzmaske 110 |
| 12 | Ohrhörer der Atemschutzmaske 110, fungieren zusammen als eine empfängerseitige Sprachausgabeeinheit |
| 13 | empfängerseitiger Lautsprecher |
| 13.a | weiterer empfängerseitiger Lautsprecher, fungiert als die weitere empfängerseitige Sprachausgabeeinheit |
| 14 | Anschluss an der Atemschutzmaske 115 für das Funkgerät 17 |
| 15 | empfängerseitiges Kabel |
| 16 | empfängerseitiges Mikrophon, fungiert als die empfängerseitige Spracheingabeeinheit |
| 17 | empfängerseitiges Funkgerät, lässt sich an den Anschluss 14 anschließen |
| 18 | Kabel für die Übermittlung des Ausgangs-Testsignal T.A |
| 19 | Betätigungseinheit der Atemschutzmaske 110 |
| 20, 20.1 | Entzerr-Vorverstärker, gehören zur Kommunikationseinheit 100 |
| 21, 21.1 | Verstärker, gehören zur Kommunikationseinheit 100 |
| 22 | Mess- und Justiereinheit, bewertet die Güte des Übertragungskanal Ü, erzeugt den Satz PW von Parameterwerten, ist in einer Ausgestaltung ein Bestandteil der Kommunikationseinheit 100 und in einer anderen Ausgestaltung ein Bestandteil der Recheneinheit 120 |
| 23 | senderseitige Schnittstelle, umfasst das Kabel 11 und den Anschluss 4 oder die Bluetooth-Verbindung 24 |
| 24 | Bluetooth-Verbindung |
| 30 | Antenne der Kommunikationseinheit 100 |
| 31 | Antenne der Recheneinheit 120 |
| 100 | Kommunikationseinheit der Atemschutzmaske 110, umfasst den senderseitigen Lautsprecher 3, das senderseitige Mikrophon 6 und die Schnittstelle 23 mit dem Kabel 11, den Anschluss 4 und die Verstärker 20, 21 sowie in einer Ausgestaltung die Mess- und Justiereinheit 22 und in einer anderen Ausgestaltung die Antenne 30 |
| 110 | Atemschutzmaske des Senders, umfasst die Bebänderung 1, den Ohrhörer 2, die Anschlüsse 4 und 5, das Funkgerät 7, das Visier 8, das Kabel 11 und die Kommunikationseinheit 100 |
| 115 | Atemschutzmaske des Empfängers, umfasst die Ohrhörer 12, den Anschluss 14, das Funkgerät 17 und weitere Bestandteile entsprechend der Atemschutzmaske 110 |
| 120 | Recheneinheit, räumlich von der Kommunikationseinheit 100 entfernt, umfasst die Mess- und Justiereinheit 22 und die Antenne 31 |
| Fs | Funkstrecke vom senderseitigen Funkgerät 7 zum empfängerseitigen Funkgerät 17 |
| Fs.a | weitere Funkstrecke vom weiteren senderseitigen Funkgerät 7 zum weiteren empfängerseitigen Funkgerät 17 |
| PW | Satz von Parameterwerten, wird von der Mess- und Justiereinheit 22 erzeugt und auf die Bauteile 20 und 21 angewendet |
| SN.A | Ausgabe-Sprachnachricht, vom empfängerseitigen Lautsprecher 13 ausgegeben |
| SN.A.a | weitere Ausgabe-Sprachnachricht, vom weiteren empfängerseitigen Lautsprecher 13 ausgegeben |
| SN.E | Eingabe-Sprachnachricht, in das senderseitige Mikrophon 6 eingegeben |
| SN.E.a | weitere Eingabe-Sprachnachricht, in das weitere senderseitige Mikrophon 6 eingegeben |
| SS.A | Ausgangs-Sprachnachricht-Signal, wird vom Übertragungskanal Ü ausgegeben und an den empfängerseitigen Lautsprecher 13 übermittelt |
| SS.A.a | weiteres Ausgangs-Sprachnachricht-Signal, wird vom weiteren Übertragungskanal Ü.a ausgegeben und an den weiteren empfängerseitigen Lautsprecher 13.a übermittelt |
| SS.E | Eingangs-Sprachnachricht-Signal, wird vom senderseitigen Mikrophon 6 erzeugt und im Übertragungskanal Ü übertragen |
| SS.E.a | weiteres Eingangs-Sprachnachricht-Signal, wird vom weiteren senderseitigen Mikrophon 6.a erzeugt und im weiteren Übertragungskanal Ü.a übertragen |
| SS.Ü | Sprachnachricht-Signal im Übertragungskanal Ü |
| Sw | Schallwellen |
| T.A | Ausgangs-Testsignal, wird am Ende des Übertragungskanals Ü generiert |
| T.E | Eingangs-Testsignal, von der Mess- und Justiereinheit 22 erzeugt und in den Übertragungskanal Ü eingespeist |
| TN | Testsignal-Sprachnachricht, von der empfängerseitigen Sprachausgabeeinheit 12 erzeugt |
| T.Ü | Testsignal während der Übertragung im Übertragungskanal Ü |
| Ü | Übertragungskanal, reicht vom Entzerr-Vorverstärker 20 bis zum empfängerseitigen Funkgerät 17 |
| Ü.a | weiterer Übertragungskanal, reicht vom weiteren Entzerr-Vorverstärker 20.a bis zum weiteren empfängerseitigen Funkgerät 17.a |

## Patentansprüche

1. Übermittlungs-Verfahren zum Übermitteln einer Sprachnachricht von einer senderseitigen Spracheingabeeinheit (6) zu einer empfängerseitigen Sprachausgabeeinheit (12),
wobei das Übermittlungs-Verfahren die automatisch durchgeführten Schritte umfasst, dass
- die senderseitige Spracheingabeeinheit (6) eine Eingabe-Sprachnachricht (SN.E) als die zu übermittelnde Sprachnachricht empfängt und in ein Eingangs-Sprachnachricht-Signal (SS.E) umwandelt,
- das Eingangs-Sprachnachricht-Signal (SS.E) an einen Übertragungskanal (Ü) übermittelt wird,
- der Übertragungskanal (Ü) das Eingangs-Sprachnachricht-Signal (SS.E) überträgt und als ein Ergebnis der Übertragung ein Ausgangs-Sprachnachricht-Signal (SS.A) ausgibt,
- das Ausgangs-Sprachnachricht-Signal (SS.A) an die empfängerseitige Sprachausgabeeinheit (12) übermittelt wird und
- die empfängerseitige Sprachausgabeeinheit (12) das übermittelte Ausgangs-Sprachnachricht-Signal (SS.A) empfängt, in eine Ausgabe-Sprachnachricht (SN.A) umwandelt und die Ausgabe-Sprachnachricht (SN.A) ausgibt,
wobei die Übertragung des Eingangs-Sprachnachricht-Signals (SS.E) im Übertragungskanal (Ü) die Schritte umfasst, dass
- eine Signalverarbeitungseinheit (20, 21) das Eingangs-Sprachnachricht-Signal (SS.E) empfängt und verarbeitet,
wobei die Signalverarbeitungseinheit (20, 21) mindestens einen veränderbaren Parameter aufweist und für den oder mindestens einen veränderbaren Parameter einen Wert (PW) verwendet, um das Eingangs-Sprachnachricht-Signal (SS.E) zu verarbeiten,
- das verarbeitete Eingangs-Sprachnachricht-Signal (SS.Ü) von der Signalverarbeitungseinheit (20, 21) an ein senderseitiges Funkgerät (7) und über eine Funkstrecke (Fs) vom senderseitigen Funkgerät (7) an ein empfängerseitiges Funkgerät (17) übertragen wird und
- das empfängerseitige Funkgerät (17) das übertragene Signal empfängt und als das Ausgangs-Sprachnachricht-Signal (SS.A) ausgibt,
wobei vor dem Schritt, die Sprachnachricht zu übermitteln, automatisch und unter Verwendung einer signalverarbeitenden Mess- und Justiereinheit (22) mindestens einmal ein Justierverfahren durchgeführt wird,
wobei das oder mindestens ein Justierverfahren die automatisch durchgeführten Schritte umfasst, dass
- die Mess- und Justiereinheit (22) ein Eingangs-Testsignal (T.E) generiert,
- das Eingangs-Testsignal (T.E) an den Übertragungskanal (Ü) übermittelt wird und
- das Eingangs-Testsignal (T.E) im Übertragungskanal (Ü) übertragen wird, so dass aus dem Eingangs-Testsignal (T.E) durch die Übertragung im Übertragungskanal (Ü) ein Ausgangs-Testsignal (T.A) erzeugt wird,
**dadurch gekennzeichnet, dass**
- das Ausgangs-Testsignal (T.A) am Übertragungskanal (Ü) vorbei zurück zur Mess- und Justiereinheit (22) übermittelt wird,
- die Mess- und Justiereinheit (22) die Güte des Übertragungskanals (Ü) bewertet und für die Bewertung das empfangene Ausgangs-Testsignal (T.A) verwendet,
- die Mess- und Justiereinheit (22) abhängig von der Bewertung der Übertragungskanal-Güte für den oder mindestens einen veränderbaren Parameter der Signalverarbeitungseinheit (20, 21) einen Wert (PW) berechnet und
- die Mess- und Justiereinheit (22) veranlasst, dass der oder jeder berechnete Wert (PW) für den jeweiligen Parameter an die Signalverarbeitungseinheit (20, 21) übermittelt und von dieser verwendet wird.

2. Übermittlungs-Verfahren nach Anspruch 1,
**dadurch gekennzeichnet, dass**
das empfängerseitige Funkgerät (17) oder ein sonstiges empfängerseitiges Gerät (16) das Ausgangs-Testsignal (T.A) empfängt,
vor der Generierung des Eingangs-Testsignals (T.E) das empfängerseitige Funkgerät (17) oder das sonstige empfängerseitige Gerät (16) mit der Mess- und Justiereinheit (22) mithilfe einer drahtgebundenen Verbindung (18) verbunden wird,
wobei der Schritt, das Ausgangs-Testsignal (T.A) am Übertragungskanal (Ü) vorbei zur Mess- und Justiereinheit (22) zu übermitteln, den Schritt umfasst,
das Ausgangs-Testsignal (T.A) durch die drahtgebundene Verbindung (18) hindurch zur Mess- und Justiereinheit (22) zu übermitteln, und
wobei bevorzugt nach der Durchführung des Justierverfahrens die drahtgebundene Verbindung (18) wieder entfernt wird.

3. Übermittlungs-Verfahren nach Anspruch 2,
**dadurch gekennzeichnet, dass**
der Schritt, das empfängerseitige Funkgerät (17) oder das sonstige empfängerseitige Gerät (16) mit der Mess- und Justiereinheit (22) zu verbinden, den Schritt umfasst, dass
das empfängerseitige Funkgerät (17) mithilfe der drahtgebundenen Verbindung (18) mit der Mess- und Justiereinheit (22) verbunden wird, und das Justierverfahren den Schritt umfasst, dass
das Ausgangs-Testsignal (T.A) unter Verwendung der drahtgebundenen Verbindung (18) vom empfängerseitigen Funkgerät (17) an die Mess- und Justiereinheit (22) übermittelt wird.

4. Übermittlungs-Verfahren nach Anspruch 2,
**dadurch gekennzeichnet, dass**
der Schritt, das empfängerseitige Funkgerät (17) oder das sonstige empfängerseitige Gerät (16) mit der Mess- und Justiereinheit (22) zu verbinden, den Schritt umfasst, dass
als das sonstige empfängerseitige Gerät eine empfängerseitige Spracheingabeeinheit (16) mithilfe der drahtgebundenen Verbindung (18) mit der Mess- und Justiereinheit (22) verbunden wird, und
das Justierverfahren die Schritte umfasst, dass
- das Ausgangs-Testsignal (T.A) an die empfängerseitige Sprachausgabeeinheit (12) übermittelt wird,
- die empfängerseitige Sprachausgabeeinheit (12) das Ausgangs-Testsignal (T.A) in eine Testsignal-Sprachnachricht (TN) umwandelt und die Testsignal-Sprachnachricht (TN) ausgibt,
- die empfängerseitige Spracheingabeeinheit (16) die Testsignal-Sprachnachricht (TN) empfängt und in ein Testsignal (TS) umwandelt,
- dieses Testsignal (TS) unter Verwendung der drahtgebundenen Verbindung (18) an die Mess- und Justiereinheit (22) übermittelt wird und
- die Mess- und Justiereinheit (22) das übermittelte Testsignal (TS) als das Ausgangs-Testsignal (T.A) verwendet, optional nach einer Aufbereitung des übermittelten Testsignals (TS).

5. Übermittlungs-Verfahren nach einem der vorhergehenden Ansprüche,
**dadurch gekennzeichnet, dass**
der Schritt, dass die Mess- und Justiereinheit (22) die Güte des Übertragungskanals (Ü) bewertet,
die Schritte umfasst, dass die Mess- und Justiereinheit (22)
- im Zeitbereich oder im Frequenzbereich ein Maß für ein Systemverhalten eines Systems berechnet,
wobei dieses System mit dem Eingangs-Testsignal (T.E) angeregt wird und dieses System als Reaktion auf diese Anregung das Ausgangs-Testsignal (T.A) erzeugt, und
- die Übertragungskanal-Güte abhängig von einer Auswertung des Maßes für das Systemverhalten bewertet.

6. Übermittlungs-Verfahren nach einem der vorhergehenden Ansprüche,
**dadurch gekennzeichnet, dass**
zusätzlich die Schritte durchgeführt werden, dass
eine weitere Sprachnachricht von einer weiteren senderseitigen Spracheingabeeinheit (6.a) zu einer weiteren empfängerseitigen Sprachausgabeeinheit (12.a) übermittelt wird,
wobei die Übermittlung der weiteren Sprachnachricht die Schritte umfasst, dass
- die weitere senderseitige Spracheingabeeinheit (6.a) eine weitere Eingabe-Sprachnachricht (SN.E.a) als die zu übermittelnde weitere Sprachnachricht empfängt und in ein weiteres Eingangs-Sprachnachricht-Signal (SS.E.a) umwandelt,
- das weitere Eingangs-Sprachnachricht-Signal (SS.E.a) zu einem weiteren Übertragungskanal (Ü.a) übermittelt wird,
- der weitere Übertragungskanal (Ü.a) das weitere Eingangs-Sprachnachricht-Signal (SS.E.a) überträgt und als Ergebnis der Übertragung ein weiteres Ausgangs-Sprachnachricht-Signal (SS.A.a) ausgibt,
- das weitere Ausgangs-Sprachnachricht-Signal (SS.A.a) an die weitere empfängerseitige Sprachausgabeeinheit (12.a) übermittelt wird und
- die weitere empfängerseitige Sprachausgabeeinheit (12.a) das empfangene weitere Ausgangs-Sprachnachricht-Signal (SS.A.a) empfängt, in eine weitere Ausgabe-Sprachnachricht (SN.A.a) umwandelt und die Ausgabe-Sprachnachricht (SN.A.a) ausgibt,
wobei die Übertragung des weiteren Eingangs-Sprachnachricht-Signals (SS.E.a) im weiteren Übertragungskanal (Ü.a) die Schritte umfasst, dass
- eine weitere Signalverarbeitungseinheit (20.a, 21.a) das weitere Eingangs-Sprachnachricht-Signal (SS.E.a) empfängt und verarbeitet,
- das verarbeitete weitere Eingangs-Sprachnachricht-Signal (SS.Ü.a) von der weiteren Signalverarbeitungseinheit (20.a, 21.a) an ein weiteres senderseitiges Funkgerät (7.a) und über eine weitere Funkstrecke (Fs.a) vom weiteren senderseitigen Funkgerät (7.a) an ein weiteres empfängerseitiges Funkgerät (17.a) übertragen wird und
- das weitere empfängerseitige Funkgerät (17.a) das weitere Ausgangs-Sprachnachricht-Signal (SS.A.a) ausgibt,
wobei vor dem Schritt, die weitere Sprachnachricht zu übermitteln, die Schritte durchgeführt werden, dass
- der oder mindestens ein Parameterwert (PW), bevorzugt jeder Parameterwert, den die Mess- und Justiereinheit (22) berechnet hat, an die weitere Signalverarbeitungseinheit (20.a, 21.a) übermittelt wird und
- veranlasst wird, dass der oder jeder übermittelte Wert (PW) für den jeweiligen Parameter der weiteren Signalverarbeitungseinheit (20.a, 21.a) verwendet wird.

7. Übermittlungs-Verfahren nach einem der vorhergehenden Ansprüche,
**dadurch gekennzeichnet, dass**
die empfängerseitige Sprachausgabeeinheit (12) mit einer von einem Menschen betätigbaren Betätigungseinheit (19) verbunden ist und
eine Betätigung der Betätigungseinheit (19) eine Durchführung des Justierverfahrens auslöst.

8. Übermittlungs-Verfahren nach einem der vorhergehenden Ansprüche,
**dadurch gekennzeichnet, dass**
die senderseitige Spracheingabeeinheit (6), das senderseitige Funkgerät (7) und die Signalverarbeitungseinheit (20, 21) Bestandteile einer senderseitigen persönlichen Schutzausrüstung (110) sind,
wobei die senderseitige persönliche Schutzausrüstung (110) dazu ausgestaltet ist, von einem Menschen an seinem Körper getragen zu werden, und
das Übermittlungs-Verfahren durchgeführt wird, während ein Mensch die senderseitige persönliche Schutzausrüstung (110) an seinem Körper trägt.

9. Übermittlungs-Verfahren nach Anspruch 8,
**dadurch gekennzeichnet, dass**
die Mess- und Justiereinheit (22) ebenfalls ein Bestandteil der senderseitigen persönlichen Schutzausrüstung (110) ist und
auch das Justierverfahren durchgeführt wird, während der Mensch die senderseitige persönliche Schutzausrüstung (110) an seinem Körper trägt.

10. Übermittlungs-Verfahren nach Anspruch 8,
**dadurch gekennzeichnet, dass**
die Mess- und Justiereinheit (22) Bestandteil einer Recheneinheit (120) ist, die räumlich von der senderseitigen persönlichen Schutzausrüstung (110) entfernt angeordnet ist, und
das Justierverfahren die zusätzlichen Schritte umfasst, dass
- das generierte Eingangs-Testsignal (T.E) von der Recheneinheit (120) an die senderseitige persönliche Schutzausrüstung (110) übermittelt wird,
- das Ausgangs-Testsignal (T.A) zur Recheneinheit (120) übermittelt wird und
- der oder jeder berechnete Parameterwert (PW) von der Recheneinheit (120) an die senderseitige persönliche Schutzausrüstung (110) übermittelt wird.

11. Übermittlungs-Verfahren nach einem der Ansprüche 8 bis 10,
**dadurch gekennzeichnet, dass**
die empfängerseitige Sprachausgabeeinheit (12) und das empfängerseitige Funkgerät (17) Bestandteile einer empfängerseitigen persönlichen Schutzausrüstung (115) sind,
wobei die empfängerseitige persönliche Schutzausrüstung (115) dazu ausgestaltet ist, von einem Menschen an seinem Körper getragen zu werden, und
das Übermittlungs-Verfahren durchgeführt wird, während ein Mensch die empfängerseitige persönliche Schutzausrüstung (115) an seinem Körper trägt.

12. Übermittlungs-Anordnung zum Übermitteln einer Sprachnachricht,
wobei die Übermittlungs-Anordnung eine Übermittlungs-Vorrichtung und eine signalverarbeitende Mess- und Justiereinheit (22) umfasst,
wobei die Übermittlungs-Vorrichtung
- eine senderseitige Spracheingabeeinheit (6),
- eine empfängerseitige Sprachausgabeeinheit (12) und
- einen Übertragungskanal (Ü)
umfasst,
wobei der Übertragungskanal (Ü)
- eine Signalverarbeitungseinheit (20, 21),
- ein senderseitiges Funkgerät (7) und
- ein empfängerseitiges Funkgerät (17)
umfasst,
wobei die Übermittlungs-Vorrichtung dazu ausgestaltet ist, bei der Übermittlung der Sprachnachricht die Schritte durchzuführen, dass
- die senderseitige Spracheingabeeinheit (6) eine Eingabe-Sprachnachricht (SN.E) als die zu übermittelnde Sprachnachricht empfängt und in ein Eingangs-Sprachnachricht-Signal (SS.E) umwandelt,
- das Eingangs-Sprachnachricht-Signal (SS.E) an den Übertragungskanal (Ü) übermittelt wird,
- der Übertragungskanal (Ü) das Eingangs-Sprachnachricht-Signal (SS.E) überträgt und als Ergebnis der Übertragung ein Ausgangs-Sprachnachricht-Signal (SS.A) ausgibt,
- das Ausgangs-Sprachnachricht-Signal (SS.A) an die empfängerseitige Sprachausgabeeinheit (12) übermittelt wird und
- die empfängerseitige Sprachausgabeeinheit (12) das übermittelte Ausgangs-Sprachnachricht-Signal (SS.A) empfängt, in eine Ausgabe-Sprachnachricht (SN.A) umwandelt und die Ausgabe-Sprachnachricht (SN.A) ausgibt,
wobei die Übermittlungs-Vorrichtung weiterhin dazu ausgestaltet ist, bei der Übertragung des Eingangs-Sprachnachricht-Signals (SS.E) im Übertragungskanal (Ü) die Schritte durchzuführen, dass
- die Signalverarbeitungseinheit (20, 21) das Eingangs-Sprachnachricht-Signal (SS.E) empfängt und verarbeitet,
- wobei die Signalverarbeitungseinheit (20, 21) mindestens einen veränderbaren Parameter aufweist und für den oder mindestens einen veränderbaren Parameter jeweils einen Wert verwendet, um das Eingangs-Sprachnachricht-Signal (SS.E) zu verarbeiten,
- das verarbeitete Eingangs-Sprachnachricht-Signal (SS.Ü) von der Signalverarbeitungseinheit (20, 21) an das senderseitige Funkgerät (7) und über eine Funkstrecke (Fs) vom senderseitigen Funkgerät (7) an das empfängerseitige Funkgerät (17) übertragen wird und
- das empfängerseitige Funkgerät (17) das übertragene Signal empfängt und als das Ausgangs-Sprachnachricht-Signal (SS.A) ausgibt, und
wobei die Mess- und Justiereinheit (22) dazu ausgestaltet ist, ein Justierverfahren durchzuführen, welches die automatisch durchgeführten Schritte umfasst, dass
- die Mess- und Justiereinheit (22) ein Eingangs-Testsignal (T.E) generiert,
- das Eingangs-Testsignal (T.E) an den Übertragungskanal (Ü) übermittelt wird und
- das Eingangs-Testsignal (T.E) im Übertragungskanal (Ü) übertragen wird, so dass aus dem Eingangs-Testsignal (T.E) durch die Übertragung im Übertragungskanal (Ü) ein Ausgangs-Testsignal (T.A) erzeugt wird,
**dadurch gekennzeichnet, dass**
- das Ausgangs-Testsignal (T.A) am Übertragungskanal (Ü) vorbei zurück zur Mess- und Justiereinheit (22) übermittelt wird,
- die Mess- und Justiereinheit (22) die Güte des Übertragungskanals (Ü) bewertet und für die Bewertung das empfangene Ausgangs-Testsignal (T.A) verwendet,
- die Mess- und Justiereinheit (22) abhängig von der Bewertung der Übertragungskanal-Güte für den oder mindestens einen veränderbaren Parameter der Signalverarbeitungseinheit (20, 21) jeweils einen Wert (PW) berechnet und
- die Mess- und Justiereinheit (22) veranlasst, dass der oder jeder berechnete Wert (PW) für den jeweiligen Parameter an die Signalverarbeitungseinheit (20, 21) übermittelt und von dieser verwendet wird.

13. Übermittlungs-Anordnung nach Anspruch 12,
**dadurch gekennzeichnet, dass**
die Übermittlungs-Anordnung ein Kabel (18) zur drahtgebundenen Datenübermittlung umfasst,
wobei das Kabel (18) dazu ausgestaltet ist,
- das empfängerseitige Funkgerät (17) oder ein sonstiges empfängerseitiges Gerät (16), welches dazu ausgestaltet ist, das Ausgangs-Testsignal (T.A) zu empfangen, lösbar mit der Mess- und Justiereinheit (22) zu verbinden und
- dadurch eine drahtgebundene Datenverbindung zwischen dem empfängerseitigen Gerät (16, 17) und der Mess- und Justiereinheit (22) herzustellen.

14. System umfassend
- eine Übermittlungs-Anordnung nach einem der Ansprüche 12 oder 13
und
- eine senderseitige persönliche Schutzausrüstung (110),
wobei die senderseitige Spracheingabeeinheit (6), das senderseitige Funkgerät (7) und die Signalverarbeitungseinheit (20, 21) Bestandteile der senderseitigen persönlichen Schutzausrüstung (110) sind und
wobei die senderseitige persönliche Schutzausrüstung (110) dazu ausgestaltet ist, von einem Menschen an seinem Körper getragen zu werden.

15. System nach Anspruch 14,
**dadurch gekennzeichnet, dass**
das System zusätzlich eine empfängerseitige persönliche Schutzausrüstung (115) umfasst,
wobei die empfängerseitige Sprachausgabeeinheit (12) und das empfängerseitige Funkgerät (17) Bestandteile der empfängerseitigen persönlichen Schutzausrüstung (115) sind und
wobei die empfängerseitige persönliche Schutzausrüstung (115) dazu ausgestaltet ist, von einem Menschen an seinem Körper getragen zu werden.

## Claims

1. Transmission method for transmitting a voice message from a sender-side voice input unit (6) to a receiver-side voice output unit (12),
the transmission method comprising the automatically performed steps whereby
- the sender-side voice input unit (6) receives an input voice message (SN.E) as the voice message to be transmitted and converts it into an input voice message signal (SS.E),
- the input voice message signal (SS.E) is transmitted to a transfer channel (Ü),
- the transfer channel (Ü) transfers the input voice message signal (SS.E) and outputs an output voice message signal (SS.A) as a result of the transfer,
- the output voice message signal (SS.A) is transmitted to the receiver-side voice output unit (12) and
- the receiver-side voice output unit (12) receives the transmitted output voice message signal (SS.A), converts it into an output voice message (SN.A) and outputs the output voice message (SN.A),
the transfer of the input voice message signal (SS.E) in the transfer channel (Ü) comprising the steps whereby
- a signal processing unit (20, 21) receives and processes the input voice message signal (SS.E),
the signal processing unit (20, 21) having at least one variable parameter and using a value (PW) for the or at least one variable parameter in order to process the input voice message signal (SS.E),
- the processed input voice message signal (SS.Ü) is transferred from the signal processing unit (20, 21) to a sender-side radio device (7) and via a radio link (Fs) from the sender-side radio device (7) to a receiver-side radio device (17) and
- the receiver-side radio device (17) receives the transferred signal and outputs it as the output voice message signal (SS.A),
an adjustment method being automatically performed at least once, prior to the step of transmitting the voice message, using a signal-processing measurement and adjustment unit (22),
the or at least one adjustment method comprising the automatically performed steps whereby
- the measurement and adjustment unit (22) generates an input test signal (T.E),
- the input test signal (T.E) is transmitted to the transfer channel (Ü) and
- the input test signal (T.E) is transferred in the transfer channel (Ü) such that an output test signal (T.A) is generated from the input test signal (T.E) by the transfer in the transfer channel (Ü),
**characterized in that**
- the output test signal (T.A) is transmitted back to the measurement and adjustment unit (22), bypassing the transfer channel (Ü),
- the measurement and adjustment unit (22) evaluates the quality of the transfer channel (Ü) and uses the received output test signal (T.A) for the evaluation,
- the measurement and adjustment unit (22) calculates a value (PW) for the or at least one variable parameter of the signal processing unit (20, 21) on the basis of the evaluation of the transfer channel quality and
- the measurement and adjustment unit (22) causes the or each calculated value (PW) for the relevant parameter to be transmitted to the signal processing unit (20, 21) and used by said signal processing unit.

2. Transmission method according to claim 1,
**characterized in that**
the receiver-side radio device (17) or a different receiver-side device (16) receives the output test signal (T.A),
the receiver-side radio device (17) or the different receiver-side device (16) is connected to the measurement and adjustment unit (22) by means of a wired connection (18) prior to the input test signal (T.E) being generated,
the step of transmitting the output test signal (T.A) to the measurement and adjustment unit (22), bypassing the transfer channel (Ü), comprising the step of
transmitting the output test signal (T.A) through the wired connection (18) to the measurement and adjustment unit (22), and
the wired connection (18) being removed again, preferably after the adjustment method has been performed.

3. Transmission method according to claim 2,
**characterized in that**
the step of connecting the receiver-side radio device (17) or the different receiver-side device (16) to the measurement and adjustment unit (22) comprises the step whereby
the receiver-side radio device (17) is connected to the measurement and adjustment unit (22) by means of the wired connection (18), and
the adjustment method comprises the step whereby
the output test signal (T.A) is transmitted from the receiver-side radio device (17) to the measurement and adjustment unit (22), using the wired connection (18).

4. Transmission method according to claim 2,
**characterized in that**
the step of connecting the receiver-side radio device (17) or the different receiver-side device (16) to the measurement and adjustment unit (22) comprises the step whereby
a receiver-side voice input unit (16) is connected as the different receiver-side device to the measurement and adjustment unit (22) by means of the wired connection (18), and
the adjustment method comprises the steps whereby
- the output test signal (T.A) is transmitted to the receiver-side voice output unit (12),
- the receiver-side voice output unit (12) converts the output test signal (T.A) into a test signal voice message (TN) and outputs the test signal voice message (TN),
- the receiver-side voice input unit (16) receives the test signal voice message (TN) and converts it into a test signal (TS),
- this test signal (TS) is transmitted to the measurement and adjustment unit (22), using the wired connection (18), and
- the measurement and adjustment unit (22) uses the transmitted test signal (TS) as the output test signal (T.A), optionally after processing of the transmitted test signal (TS).

5. Transmission method according to any of the preceding claims,
**characterized in that**
the step whereby the measurement and adjustment unit (22) evaluates the quality of the transfer channel (Ü)
comprises the steps whereby the measurement and adjustment unit (22)
- calculates an indicator for a system behavior of a system in the time domain or the frequency domain,
this system being excited by the input test signal (T.E) and this system generating the output test signal (T.A) in response to this excitation, and
- evaluates the transfer channel quality on the basis of an assessment of the indicator for the system behavior.

6. Transmission method according to any of the preceding claims,
**characterized in that**
additionally, the steps are performed whereby
a further voice message is transmitted from a further sender-side voice input unit (6.a) to a further receiver-side voice output unit (12.a),
the transmission of the further voice message comprising the steps whereby
- the further sender-side voice input unit (6.a) receives a further input voice message (SN.E.a) as the further voice message to be transmitted and converts it into a further input voice message signal (SS.E.a),
- the further input voice message signal (SS.E.a) is transmitted to a further transfer channel (Ü.a),
- the further transfer channel (Ü.a) transfers the further input voice message signal (SS.E.a) and outputs a further output voice message signal (SS.A.a) as a result of the transfer,
- the further output voice message signal (SS.A.a) is transmitted to the further receiver-side voice output unit (12.a) and
- the further receiver-side voice output unit (12.a) receives the received further output voice message signal (SS.A.a), converts it into a further output voice message (SN.A.a) and outputs the output voice message (SN.A.a),
the transfer of the further input voice message signal (SS.E.a) in the further transfer channel (Ü.a) comprising the steps whereby
- a further signal processing unit (20.a, 21.a) receives and processes the further input voice message signal (SS.E.a),
- the processed further input voice message signal (SS.Ü.a) is transferred from the further signal processing unit (20.a, 21.a) to a further sender-side radio device (7.a) and via a further radio link (Fs.a) from the further sender-side radio device (7.a) to a further receiver-side radio device (17.a) and
- the further receiver-side radio device (17.a) outputs the further output voice message signal (SS.A.a),
the steps being performed, prior to the step of transmitting the further voice message, whereby
- the or at least one parameter value (PW), preferably each parameter value, calculated by the measurement and adjustment unit (22) is transmitted to the further signal processing unit (20.a, 21.a) and
- the or each transmitted value (PW) is caused to be used for the relevant parameter of the further signal processing unit (20.a, 21.a).

7. Transmission method according to any of the preceding claims,
**characterized in that**
the receiver-side voice output unit (12) is connected to an actuating unit (19) that can be actuated by a person and
actuation of the actuating unit (19) triggers performance of the adjustment method.

8. Transmission method according to any of the preceding claims,
**characterized in that**
the sender-side voice input unit (6), the sender-side radio device (7), and the signal processing unit (20, 21) are components of sender-side personal protective equipment (110),
the sender-side personal protective equipment (110) being configured to be worn by a person on his/her body, and
the transmission method is performed while a person is wearing the sender-side personal protective equipment (110) on his/her body.

9. Transmission method according to claim 8,
**characterized in that**
the measurement and adjustment unit (22) is also a component of the sender-side personal protective equipment (110) and
the adjustment method is also performed while the person is wearing the sender-side personal protective equipment (110) on his/her body.

10. Transmission method according to claim 8,
**characterized in that**
the measurement and adjustment unit (22) is a component of a computing unit (120) which is spatially distant from the sender-side personal protective equipment (110), and
the adjustment method comprises the additional steps whereby
- the generated input test signal (T.E) is transmitted from the computing unit (120) to the sender-side personal protective equipment (110),
- the output test signal (T.A) is transmitted to the computing unit (120) and
- the or each calculated parameter value (PW) is transmitted from the computing unit (120) to the sender-side personal protective equipment (110).

11. Transmission method according to any of claims 8 to 10,
**characterized in that**
the receiver-side voice output unit (12) and the receiver-side radio device (17) are components of receiver-side personal protective equipment (115),
the receiver-side personal protective equipment (115) being configured to be worn by a person on his/her body, and
the transmission method is performed while a person is wearing the receiver-side personal protective equipment (115) on his/her body.

12. Transmission arrangement for transmitting a voice message,
the transmission arrangement comprising a transmission apparatus and a signal-processing measurement and adjustment unit (22),
the transmission apparatus comprising
- a sender-side voice input unit (6),
- a receiver-side voice output unit (12) and
- a transfer channel (Ü),
the transfer channel (Ü) comprising
- a signal processing unit (20, 21),
- a sender-side radio device (7) and
- a receiver-side radio device (17),
the transmission apparatus being configured to perform, during the transmission of the voice message, the steps whereby
- the sender-side voice input unit (6) receives an input voice message (SN.E) as the voice message to be transmitted and converts it into an input voice message signal (SS.E),
- the input voice message signal (SS.E) is transmitted to the transfer channel (Ü),
- the transfer channel (Ü) transfers the input voice message signal (SS.E) and outputs an output voice message signal (SS.A) as a result of the transfer,
- the output voice message signal (SS.A) is transmitted to the receiver-side voice output unit (12) and
- the receiver-side voice output unit (12) receives the transmitted output voice message signal (SS.A), converts it into an output voice message (SN.A) and outputs the output voice message (SN.A),
the transmission apparatus being further configured to perform, during the transfer of the input voice message signal (SS.E) in the transfer channel (Ü), the steps whereby
- the signal processing unit (20, 21) receives and processes the input voice message signal (SS.E),
- the signal processing unit (20, 21) having at least one variable parameter and using a value in each case for the or at least one variable parameter in order to process the input voice message signal (SS.E),
- the processed input voice message signal (SS.Ü) is transferred from the signal processing unit (20, 21) to the sender-side radio device (7) and via a radio link (Fs) from the sender-side radio device (7) to the receiver-side radio device (17) and
- the receiver-side radio device (17) receives the transferred signal and outputs it as the output voice message signal (SS.A), and
the measurement and adjustment unit (22) being configured to perform an adjustment method which comprises the automatically performed steps whereby
- the measurement and adjustment unit (22) generates an input test signal (T.E),
- the input test signal (T.E) is transmitted to the transfer channel (Ü) and
- the input test signal (T.E) is transferred in the transfer channel (Ü) such that an output test signal (T.A) is generated from the input test signal (T.E) by the transfer in the transfer channel (Ü),
**characterized in that**
- the output test signal (T.A) is transmitted back to the measurement and adjustment unit (22), bypassing the transfer channel (Ü),
- the measurement and adjustment unit (22) evaluates the quality of the transfer channel (Ü) and uses the received output test signal (T.A) for the evaluation,
- the measurement and adjustment unit (22) calculates a value (PW) in each case for the or at least one variable parameter of the signal processing unit (20, 21) on the basis of the evaluation of the transfer channel quality and
- the measurement and adjustment unit (22) causes the or each calculated value (PW) for the relevant parameter to be transmitted to the signal processing unit (20, 21) and used by said signal processing unit.

13. Transmission arrangement according to claim 12,
**characterized in that**
the transmission arrangement comprises a cable (18) for wired data transmission,
the cable (18) being configured
- to detachably connect the receiver-side radio device (17) or a different receiver-side device (16), which is configured to receive the output test signal (T.A), to the measurement and adjustment unit (22) and
- as a result to establish a wired data connection between the receiver-side device (16, 17) and the measurement and adjustment unit (22).

14. System, comprising
- a transmission arrangement according to either of claims 12 and 13, and
- sender-side personal protective equipment (110),
wherein the sender-side voice input unit (6), the sender-side radio device (7), and the signal processing unit (20, 21) are components of the sender-side personal protective equipment (110) and
wherein the sender-side personal protective equipment (110) is configured to be worn by a person on his/her body.

15. System according to claim 14,
**characterized in that**
the system additionally comprises receiver-side personal protective equipment (115),
the receiver-side voice output unit (12) and the receiver-side radio device (17) being components of the receiver-side personal protective equipment (115) and
the receiver-side personal protective equipment (115) being configured to be worn by a person on his/her body.

## Revendications

1. Procédé de transmission permettant de transmettre un message vocal d'une unité d'entrée vocale côté émetteur (6) à une unité de sortie vocale côté récepteur (12),
dans lequel le procédé de transmission comprend les étapes exécutées automatiquement, selon lesquelles
- l'unité d'entrée vocale côté émetteur (6) reçoit un message vocal d'entrée (SN.E) comme le message vocal à transmettre et le convertit en un signal de message vocal d'entrée (SS.E),
- le signal de message vocal d'entrée (SS.E) est transmis à un canal de transfert (Ü),
- le canal de transfert (Ü) transfère le signal de message vocal d'entrée (SS.E) et délivre un signal de message vocal de sortie (SS.A) en tant que résultat du transfert,
- le signal de message vocal de sortie (SS.A) est transmis à l'unité de sortie vocale côté récepteur (12), et
- l'unité de sortie vocale côté récepteur (12) reçoit le signal de message vocal de sortie (SS.A) transmis, le convertit en un message vocal de sortie (SN.A) et délivre le message vocal de sortie (SN.A),
dans lequel la transmission du signal de message vocal d'entrée (SS.E) dans le canal de transfert (Ü) comprend les étapes selon lesquelles
- une unité de traitement de signal (20, 21) reçoit et traite le signal de message vocal d'entrée (SS.E),
dans lequel l'unité de traitement de signal (20, 21) présente au moins un paramètre modifiable et utilise une valeur (PW) pour le ou au moins un paramètre modifiable afin de traiter le signal de message vocal d'entrée (SS.E),
- le signal de message vocal d'entrée traité (SS.Ü) est transféré par l'unité de traitement de signal (20, 21) à un appareil radio côté émetteur (7) et, par l'intermédiaire d'une liaison radio (Fs), de l'appareil radio côté émetteur (7) à un appareil radio côté récepteur (17), et
- l'appareil radio côté récepteur (17) reçoit le signal transféré et le délivre en tant que signal de message vocal de sortie (SS.A),
dans lequel, avant l'étape consistant à transmettre le message vocal, un procédé d'ajustement est exécuté automatiquement et au moins une fois à l'aide d'une unité de mesure et d'ajustement (22) traitant des signaux,
dans lequel le ou au moins un procédé d'ajustement comprend les étapes exécutées automatiquement, selon lesquelles
- l'unité de mesure et d'ajustement (22) génère un signal de test d'entrée (T.E),
- le signal de test d'entrée (T.E) est transmis au canal de transfert (Ü) et
- le signal de test d'entrée (T.E) est transféré dans le canal de transfert (Ü), en sorte qu'un signal de test de sortie (T.A) est créé à partir du signal de test d'entrée (T.E) par le transfert dans le canal de transfert (Ü),
**caractérisé en ce que**
- le signal de test de sortie (T.A) est transmis à l'unité de mesure et d'ajustement (22) en passant par le canal de transfert (Ü),
- l'unité de mesure et d'ajustement (22) évalue la qualité du canal de transfert (Ü) et utilise pour l'évaluation le signal de test de sortie (T.A) reçu,
- l'unité de mesure et d'ajustement (22) calcule une valeur (PW) en fonction de l'évaluation de la qualité de canal de transfert pour le ou au moins un paramètre modifiable de l'unité de traitement de signal (20, 21) et
- l'unité de mesure et d'ajustement (22) fait en sorte que la ou chaque valeur (PW) calculée pour le paramètre respectif soit transmise à l'unité de traitement de signal (20, 21) et utilisée par celle-ci.

2. Procédé de transmission selon la revendication 1,
**caractérisé en ce que**
l'appareil radio côté récepteur (17) ou un autre appareil côté récepteur (16) reçoit le signal de test de sortie (T.A),
avant la génération du signal de test d'entrée (T.E), l'appareil radio côté récepteur (17) ou l'autre appareil côté récepteur (16) est connecté à l'unité de mesure et d'ajustement (22) au moyen d'une connexion filaire (18),
dans lequel l'étape consistant à transmettre le signal de test de sortie (T.A) à l'unité de mesure et d'ajustement (22) en passant par le canal de transfert (Ü) comprend l'étape, selon laquelle,
le signal de test de sortie (T.A) est transmis à l'unité de mesure et d'ajustement (22) par la connexion filaire (18), et
dans lequel de préférence la connexion filaire (18) est retirée après l'exécution du procédé d'ajustement.

3. Procédé de transmission selon la revendication 2,
**caractérisé en ce que**
l'étape de connexion de l'appareil radio côté récepteur (17) ou de l'autre appareil côté récepteur (16) à l'unité de mesure et d'ajustement (22) comprend l'étape, selon laquelle
l'appareil radio côté récepteur (17) est connecté à l'unité de mesure et d'ajustement (22) au moyen de la connexion filaire (18), et
le procédé d'ajustement comprend l'étape selon laquelle
le signal de test de sortie (T.A) est transmis à l'unité de mesure et d'ajustement (22) par l'appareil radio côté récepteur (17) à l'aide de la connexion filaire (18).

4. Procédé de transmission selon la revendication 2,
**caractérisé en ce que**
l'étape de connexion de l'appareil radio côté récepteur (17) ou de l'autre appareil côté récepteur (16) à l'unité de mesure et d'ajustement (22) comprend l'étape, selon laquelle
en tant qu'autre appareil côté récepteur, une unité d'entrée vocale côté récepteur (16) est connectée à l'unité de mesure et d'ajustement (22) au moyen de la connexion filaire (18), et
le procédé d'ajustement comprend les étapes selon lesquelles
- le signal de test de sortie (T.A) est transmis à l'unité de sortie vocale côté récepteur (12),
- l'unité de sortie vocale côté récepteur (12) convertit le signal de test de sortie (T.A) en un message vocal de signal de test (TN) et délivre le message vocal de signal de test (TN),
- l'unité d'entrée vocale côté récepteur (16) reçoit le message vocal de signal de test (TN) et le convertit en un signal de test (TS),
- ce signal de test (TS) est transmis à l'unité de mesure et d'ajustement (22) à l'aide de la connexion filaire (18), et
- l'unité de mesure et d'ajustement (22) utilise le signal de test (TS) transmis comme le signal de test de sortie (T.A), éventuellement après un traitement du signal de test (TS) transmis.

5. Procédé de transmission selon l'une des revendications précédentes,
**caractérisé en ce que**
l'étape selon laquelle l'unité de mesure et d'ajustement (22) évalue la qualité du canal de transfert (Ü),
comprend les étapes selon lesquelles l'unité de mesure et d'ajustement (22)
- calcule, dans le domaine temporel ou dans le domaine fréquentiel, une mesure pour un comportement système d'un système,
dans lequel ce système est excité par le signal de test d'entrée (T.E) et ce système crée le signal de test de sortie (T.A) en réponse à cette excitation, et
- évalue la qualité de canal de transfert en fonction d'une évaluation de la mesure pour le comportement système.

6. Procédé de transmission selon l'une des revendications précédentes,
**caractérisé en ce**
**qu'**en outre, les étapes sont exécutées, selon lesquelles
un autre message vocal est transmis d'une autre unité d'entrée vocale côté émetteur (6.a) à une autre unité de sortie vocale côté récepteur (12.a),
dans lequel la transmission de l'autre message vocal comprend les étapes selon lesquelles
- l'autre unité d'entrée vocale côté émetteur (6.a) reçoit un autre message vocal d'entrée (SN.E.a) comme l'autre message vocal à transmettre et le convertit en un autre signal de message vocal d'entrée (SS.E.a),
- l'autre signal de message vocal d'entrée (SS.E.a) est transmis à un autre canal de transfert (Ü.a),
- l'autre canal de transfert (Ü.a) transmet l'autre signal de message vocal d'entrée (SS.E.a) et délivre un autre signal de message vocal de sortie (SS.A.a) en tant que résultat du transfert,
- l'autre signal de message vocal de sortie (SS.A.a) est transmis à l'autre unité de sortie vocale côté récepteur (12.a) et
- l'autre unité de sortie vocale côté récepteur (12.a) reçoit l'autre signal de message vocal de sortie (SS.A.a) reçu, le convertit en un autre message vocal de sortie (SN.A.a) et délivre le message vocal de sortie (SN.A.a),
dans lequel le transfert de l'autre signal de message vocal d'entrée (SS.E.a) dans l'autre canal de transfert (Ü.a) comprend les étapes selon lesquelles
- une autre unité de traitement de signal (20.a, 21.a) reçoit et traite l'autre signal de message vocal d'entrée (SS.E.a),
- l'autre signal de message vocal d'entrée traité (SS.Ü.a) est transmis par l'autre unité de traitement de signal (20.a, 21.a) à un autre appareil radio côté émetteur (7.a) et, par l'intermédiaire d'une autre liaison radio (Fs.a), de l'autre appareil radio côté émetteur (7.a) à un autre appareil radio côté récepteur (17.a) et
- l'autre appareil radio côté récepteur (17.a) délivre l'autre signal de message vocal de sortie (SS.A.a),
dans lequel, avant l'étape selon laquelle l'autre message vocal est transmis, les étapes sont exécutées, selon lesquelles
- la ou au moins une valeur de paramètre (PW), de préférence chaque valeur de paramètre que l'unité de mesure et d'ajustement (22) a calculée, est transmise à l'autre unité de traitement de signal (20.a, 21.a) et
- il est fait en sorte que la ou chaque valeur (PW) transmise est utilisée pour le paramètre respectif de l'autre unité de traitement de signal (20.a, 21.a).

7. Procédé de transmission selon l'une des revendications précédentes,
**caractérisé en ce que**
l'unité de sortie vocale côté récepteur (12) est connectée à une unité d'actionnement (19) pouvant être actionnée par une personne, et
un actionnement de l'unité d'actionnement (19) déclenche une exécution du procédé d'ajustement.

8. Procédé de transmission selon l'une des revendications précédentes,
**caractérisé en ce que**
l'unité d'entrée vocale côté émetteur (6), l'appareil radio côté émetteur (7) et l'unité de traitement de signal (20, 21) sont des composants d'un équipement de protection individuelle côté émetteur (110),
dans lequel l'équipement de protection individuelle côté émetteur (110) est configuré pour être porté par une personne sur son corps, et
le procédé de transmission est exécuté alors qu'une personne porte l'équipement de protection individuelle côté émetteur (110) sur son corps.

9. Procédé de transmission selon la revendication 8,
**caractérisé en ce que**
l'unité de mesure et d'ajustement (22) est également un composant de l'équipement de protection individuelle côté émetteur (110) et
le procédé d'ajustement est également exécuté pendant que la personne porte l'équipement de protection individuelle côté émetteur (110) sur son corps.

10. Procédé de transmission selon la revendication 8,
**caractérisé en ce que**
l'unité de mesure et d'ajustement (22) est un composant d'une unité de calcul (120) qui est disposée spatialement à distance de l'équipement de protection individuelle côté émetteur (110), et
le procédé d'ajustement comprend les étapes supplémentaires selon lesquelles
- le signal de test d'entrée généré (T.E) est transmis par l'unité de calcul (120) à l'équipement de protection individuelle côté émetteur (110),
- le signal de test de sortie (T.A) est transmis à l'unité de calcul (120) et
- la ou chaque valeur de paramètre (PW) calculée est transmise par l'unité de calcul (120) à l'équipement de protection individuelle côté émetteur (110).

11. Procédé de transmission selon l'une des revendications 8 à 10,
**caractérisé en ce que**
l'unité de sortie vocale côté récepteur (12) et l'appareil radio côté récepteur (17) sont des composants d'un équipement de protection individuelle côté récepteur (115),
dans lequel l'équipement de protection individuelle côté récepteur (115) est configuré pour être porté par une personne sur son corps, et
le procédé de transmission est exécuté alors qu'une personne porte l'équipement de protection individuelle côté récepteur (115) sur son corps.

12. Agencement de transmission permettant de transmettre un message vocal,
dans lequel l'agencement de transmission comprend un dispositif de transmission et une unité de mesure et d'ajustement (22) traitant des signaux,
dans lequel le dispositif de transmission comprend
- une unité d'entrée vocale côté émetteur (6),
- une unité de sortie vocale côté récepteur (12), et
- un canal de transfert (Ü),
dans lequel le canal de transfert (Ü) comprend
- une unité de traitement de signal (20, 21),
- un appareil radio côté émetteur (7) et
- un appareil radio côté récepteur (17),
dans lequel le dispositif de transmission est configuré pour exécuter, lors de la transmission du message vocal, les étapes selon lesquelles
- l'unité d'entrée vocale côté émetteur (6) reçoit un message vocal d'entrée (SN.E) comme le message vocal à transmettre et le convertit en un signal de message vocal d'entrée (SS.E),
- le signal de message vocal d'entrée (SS.E) est transmis au canal de transfert (Ü),
- le canal de transfert (Ü) transfère le signal de message vocal d'entrée (SS.E) et délivre un signal de message vocal de sortie (SS.A) en tant que résultat du transfert,
- le signal de message vocal de sortie (SS.A) est transmis à l'unité de sortie vocale côté récepteur (12), et
- l'unité de sortie vocale côté récepteur (12) reçoit le signal de message vocal de sortie (SS.A) transmis, le convertit en un message vocal de sortie (SN.A) et délivre le message vocal de sortie (SN.A),
dans lequel le dispositif de transmission est en outre configuré pour exécuter, lors de la transmission du signal de message vocal d'entrée (SS.E) dans le canal de transfert (Ü), les étapes selon lesquelles
- l'unité de traitement de signal (20, 21) reçoit et traite le signal de message vocal d'entrée (SS.E),
- dans lequel l'unité de traitement de signal (20, 21) présente au moins un paramètre modifiable et utilise une valeur pour le ou au moins un paramètre modifiable afin de traiter le signal de message vocal d'entrée (SS.E),
- le signal de message vocal d'entrée traité (SS.Ü) est transféré par l'unité de traitement de signal (20, 21) à l'appareil radio côté émetteur (7) et, par l'intermédiaire d'une liaison radio (Fs), de l'appareil radio côté émetteur (7) à l'appareil radio côté récepteur (17), et
- l'appareil radio côté récepteur (17) reçoit le signal transféré et le délivre en tant que signal de message vocal de sortie (SS.A), et
dans lequel l'unité de mesure et d'ajustement (22) est configurée pour exécuter un procédé d'ajustement qui comprend les étapes exécutées automatiquement selon lesquelles
- l'unité de mesure et d'ajustement (22) génère un signal de test d'entrée (T.E),
- le signal de test d'entrée (T.E) est transmis au canal de transfert (Ü) et
- le signal de test d'entrée (T.E) est transféré dans le canal de transfert (Ü), en sorte qu'un signal de test de sortie (T.A) est créé à partir du signal de test d'entrée (T.E) par le transfert dans le canal de transfert (Ü),
**caractérisé en ce que**
- le signal de test de sortie (T.A) est transmis à l'unité de mesure et d'ajustement (22) en passant par le canal de transfert (Ü),
- l'unité de mesure et d'ajustement (22) évalue la qualité du canal de transfert (Ü) et utilise pour l'évaluation le signal de test de sortie (T.A) reçu,
- l'unité de mesure et d'ajustement (22) calcule respectivement une valeur (PW) en fonction de l'évaluation de la qualité de canal de transfert pour le ou au moins un paramètre modifiable de l'unité de traitement de signal (20, 21) et
- l'unité de mesure et d'ajustement (22) fait en sorte que la ou chaque valeur (PW) calculée pour le paramètre respectif soit transmise à l'unité de traitement de signal (20, 21) et utilisée par celle-ci.

13. Agencement de transmission selon la revendication 12,
**caractérisé en ce que**
l'agencement de transmission comprend un câble (18) pour la transmission de données filaire,
dans lequel le câble (18) est configuré,
- pour connecter de manière amovible l'appareil radio côté récepteur (17) ou un autre appareil côté récepteur (16), qui est configuré pour recevoir le signal de test de sortie (T.A), à l'unité de mesure et d'ajustement (22) et
- pour établir ainsi une connexion de données filaire entre l'appareil côté récepteur (16, 17) et l'unité de mesure et d'ajustement (22).

14. Système comprenant
- un agencement de transmission selon l'une des revendications 12 ou 13 et
- un équipement de protection individuelle côté émetteur (110),
dans lequel l'unité d'entrée vocale côté émetteur (6), l'appareil radio côté émetteur (7) et l'unité de traitement de signal (20, 21) sont des composants de l'équipement de protection individuelle côté émetteur (110) et
dans lequel l'équipement de protection individuelle côté émetteur (110) est configuré pour être porté par une personne sur son corps.

15. Système selon la revendication 14,
**caractérisé en ce que**
le système comprend en outre un équipement de protection individuelle côté récepteur (115),
dans lequel l'unité de sortie vocale côté récepteur (12) et l'appareil radio côté récepteur (17) sont des composants de l'équipement de protection individuelle côté récepteur (115) et
dans lequel l'équipement de protection individuelle côté récepteur (115) est configuré pour être porté par une personne sur son corps.
